# EUROPEAN PATENT APPLICATION

(11) **EP 3 836 470 A1**
(43) Date of publication of application: **16.06.2021**
(21) Application number: 19892513.3
(22) Date of filing: 29.03.2019
(51) Int. Cl.: H04L 5/00, H04W 88/08, H04W 72/04, H04W 72/12

(54) **METHOD, APPARATUS AND TERMINAL FOR PROCESSING SCHEDULING REQUEST**

(30) Priority: 04.12.2018 WO PCT/CN2018/119219; 23.01.2019 WO PCT/CN2019/072842
(71) Applicant: GUANGDONG OPPO MOBILE TELECOMMUNICATIONS CORP., LTD., Dongguan Guangdong 523860 (CN)
(72) Inventor: XU, Jing, Dongguan, Guangdong 523860 (CN); SHI, Cong, Dongguan, Guangdong 523860 (CN)
(74) Representative: Penza, Giancarlo
(86) International application number: PCT/CN2019/080667
(87) International publication number: WO 2020/113869

(57) **Abstract**

An embodiment of the present application provides a method, an apparatus and a terminal for processing a scheduling request. The method comprises a MAC layer of the terminal instructing a physical layer to transmit a first scheduling request.

## Description

### Technical Field

Embodiments of the present application relate to the field of mobile communication technology, and more particularly, to a method and device for processing a scheduling request and a terminal.

### Background

In the new radio (NR) Industry Internet of Things (IIoT), both enhance mobile broadband (eMBB) service and ultra reliable low latency communication (URLLC) service need to be supported. The requirement on high reliability and low latency needs to be ensured for the URLLC services. When the two types of services coexist, a case where uplink control information (UCI) of the two types of services overlaps in the time domain and/or a case where UCI of the same type of services overlaps in the time domain, for example, a case where a scheduling request (SR) triggered by the URLLC service and the SR triggered by the eMBB service overlap in time, will occur. For current protocols, a terminal will select only one SR for transmission at the same time, and if it is not ensured that uplink physical control channel (PUCCH) resources corresponding to the two SRs are configured separately by a network, a problem that which SR is to be selected by the terminal for transmission will be caused, and this selection is made based on the implementation by the terminal. If the terminal selects an SR with a low Quality of Service (QoS) requirement for transmission, a problem is caused that a high QoS requirement cannot be guaranteed, such as a problem that a latency of the URLLC service cannot be guaranteed. In addition, when the UCI cannot be multiplexed, a problem of conflict between the SR and hybrid automatic repeat request-ACK (HARQ-ACK) and transmission of channel state information-reference signals (CSI-RSs) or a problem of conflict between the UCI and an uplink physical shared channel (PUSCH) will occur, at which point an inappropriate priority selection will also cause that the requirement of the service with a high QoS requirement cannot be met.

### Summary

Embodiments of the present application provide a method and device for processing a scheduling request and a terminal.

A method for processing a scheduling request in accordance with an embodiment of the present application includes:
a media access control (MAC) layer indicating a physical layer to send a first scheduling request.

A device for processing a scheduling request in accordance with an embodiment of the present application includes:
an indicating unit, configured to indicate, through a MAC layer, a physical layer to send a first scheduling request.

A terminal in accordance with an embodiment of the present application includes a processor and a memory. The memory is used to store a computer program, and the processor is used to call and run the computer program stored in the memory to perform the method for processing the scheduling request described above.

An embodiment of the present application provides a chip used to implement the method for processing the scheduling request described above.

Specifically, the chip includes a processor used to call and run a computer program from a memory, so that a device having the chip installed therein performs the method for processing the scheduling request described above.

An embodiment of the present application provides a computer readable storage medium used to store a computer program, which causes a computer to perform the method for processing the scheduling request described above.

An embodiment of the present application provides a computer program product including computer program instructions, which cause a computer to perform the method for processing the scheduling request described above.

A computer program provided by an embodiment of the present application, when run on a computer, causes the computer to perform the method for processing the scheduling request described above.

The embodiment of the present application proposes the method for processing the scheduling request in a case where transmission resources for multiple pieces of UCI or UCI and a PUSCH overlap, so as to ensure effective transmission for a high QoS requirement, such as URLLC services with high reliability and low latency, and ensure transmission performance of the terminal.

### Brief Description of Drawings

The drawings described herein are intended to provide a further understanding of the present application and form a portion of the present application. Exemplary embodiments of the present application and the description thereof are intended to explain the present application and do not constitute improper limitation to the present application. In the drawings:
FIG. 1 is a schematic diagram of an architecture of a communication system provided in an embodiment of the present application;
FIG. 2 is a schematic flow diagram of a method for processing a scheduling request provided in an embodiment of the present application;
FIG. 3 is a schematic structural diagram of a device for processing a scheduling request provided in an embodiment of the present application;
FIG. 4 is a schematic structural diagram of a communication device provided in an embodiment of the present application;
FIG. 5 is a schematic structural diagram of a chip provided in an embodiment of the present application; and
FIG. 6 is a schematic block diagram of a communication system provided in an embodiment of the present application.

### Detailed Description

Technical schemes in embodiments of the present application will be described below with reference to the drawings in the embodiments of the present application. It is apparent that the embodiments described are just some of the embodiments of the present application, but not all of the embodiments of the present application. According to the embodiments of the present application, all other embodiments achieved by a person of ordinary skill in the art without making inventive efforts are within the protection scope of the present application.

The technical schemes in the embodiments of the present application may be applied to various communication systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, a LTE Time Division Duplex (TDD) system, a Universal Mobile Telecommunications System (UMTS), a Worldwide Interoperability for Microwave Access (WiMAX) communication system or a 5G system.

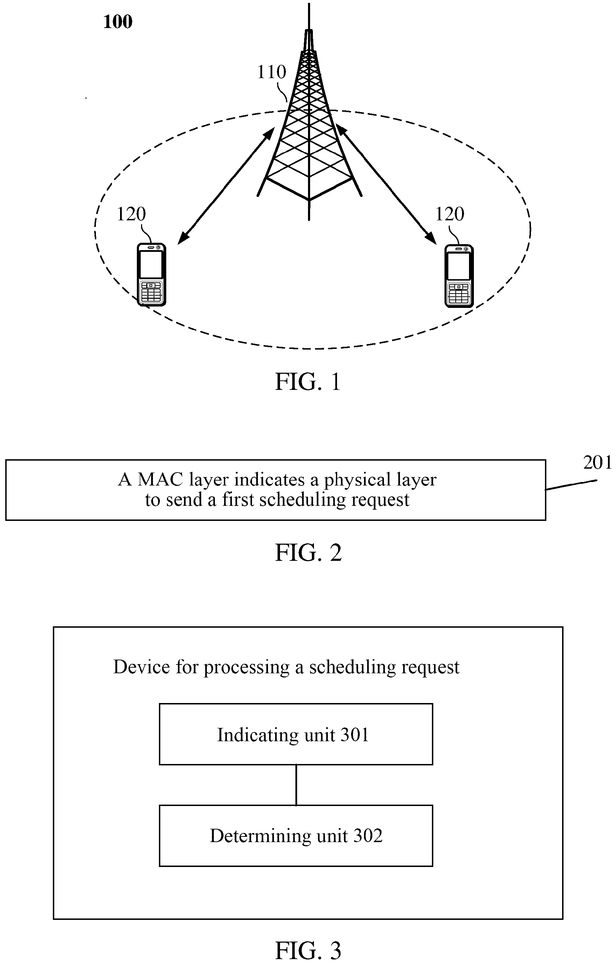

Illustratively, a communication system 100 applied in an embodiment of the present application is shown in FIG. 1. The communication system 100 may include a network device 110. The network device 110 may be a device that communicates with a terminal 120 (or referred to as a communication terminal, or a terminal). The network device 110 may provide communication coverage for a specific geographical area, and may communicate with terminals located within the coverage area. Optionally, the network device 110 may be a Base Transceiver Station (BTS) in a GSM system or CDMA system, or a NodeB (NB) in a WCDMA system, or an Evolutional Node B (eNB or eNodeB) in an LTE system, or a radio controller in a Cloud Radio Access Network (CRAN), or the network device may be a mobile switching center, a relay station, an access point, a vehicle-mounted device, a wearable device, a hub, a switch, a bridge, a router, a network side device in a 5G network, or a network device in a future evolved Public Land Mobile Network (PLMN).

The wireless communication system 100 further includes at least one terminal 120 located within the coverage area of the network device 110. The "terminal" as used herein includes, but not limited to, a device configured to be connected via a wired circuit, for example, via a public switched telephone network (PSTN), a digital subscriber line (DSL), a digital cable, a direct cable; and/or another data connection/network; and/or via a wireless interface, for instance, for a cellular network, a wireless local area network (WLAN), a digital television network such as a handheld digital video broadcasting-handheld (DVB-H) network, a satellite network, and an amplitude modulation - frequency modulation (AM-FM) broadcast transmitter; and/or an apparatus of another terminal configured to receive/transmit communication signals; and/or an Internet of Things (IoT) device. A terminal configured to communicate via a wireless interface may be referred to as a "wireless communication terminal", a "wireless terminal" or a "mobile terminal". Examples of the mobile terminal include, but not limited to, a satellite or cellular phone; a personal communication system (PCS) terminal capable of combining a cellular wireless phone with data processing, facsimile, and data communication abilities; a personal digital assistant (PDA) that may include a radio phone, a pager, internet/intranet access, a Web browser, a memo pad, a calendar, a Global Positioning System (GPS) receiver; and a conventional laptop and/or palmtop receiver or other electronic devices including a radio phone transceiver. The terminal may refer to an access terminal, user equipment (UE), a subscriber unit, a subscriber station, a mobile station, a rover station, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or other processing devices connected to a wireless modem, a vehicle-mounted device, a wearable device, a terminal in a 5G network, or a terminal in a future evolved Public Land Mobile Network (PLMN).

Optionally, device to device (D2D) communication may be established between the terminals 120.

Optionally, the 5G system or 5G network may be referred to as a new radio (NR) system or a NR network.

FIG. 1 illustrates schematically one network device and two terminals. Optionally, the communication system 100 may include multiple network devices, and other numbers of terminals may be included within the coverage area of each network device, and the embodiments of the present application are not limited thereto.

Optionally, the communication system 100 may include other network entities, such as a network controller and a mobile management entity. The Embodiments of the present application are not limited thereto.

It should be understood that a device with a communication function in a network/system in the embodiments of the present application may be referred to as a communication device. Taking the communication system 100 shown in FIG. 1 as an example, the communication device may include a network device 110 and a terminal 120 which have communication functions, and the network device 110 and the terminal 120 may be the specific devices described above, and will not be described repeatedly herein. The communication device may also include other devices in the communication system 100, such as other network entities, such as network controllers and mobile management entities, and the embodiments of the present application are not limited thereto.

It should be understood that the terms "system" and "network" are often used interchangeably herein. The term "and/or" herein describes an association relationship between associated objects only, indicating that there may be three relationships, for example, A and/or B may indicate three cases: A alone, A and B, and B alone. In addition, the symbol "/" herein generally indicates that there is a "or" relationship between the associated objects before and after "/".

In order to facilitate understanding of the technical schemes of the embodiments of the present application, related technologies involved in the embodiments of the present application will be explained below.

It should be noted that the embodiments of the present application may be applied to a scenario where uplink control information (UCI) collides (conflicts) with other UCI, or a scenario where UCI collides (conflicts) with physical uplink shared channel (PUSCH) transmission, or a scenario where a PUSCH collides (conflicts) with other PUSCH transmission, or a scenario where UCI collides (conflicts) with data transmission, or a scenario where UCI collides with a media access control control element (MAC CE), or a scenario where UCI conflicts with a physical random access channel (PRACH), and which will be selected, or which has a priority, or which is cancelled is determined. It should be noted that the UCI may also be replaced with the PUCCH.

Optionally, information carried by the UCI includes, but is not limited to, at least one of hybrid automatic repeat request (HARQ)-ACK/Negative Acknowledgement (NACK), HARQ feedback, a channel state information reference signal (CSI-RS), and a scheduling request (SR).

Optionally, the MAC CE includes, but is not limited to, at least one of a power headroom report (PHR) MAC CE, a data volume and power headroom report (DPR) MAC CE, a semi-persistent scheduling (SPS) confirmation MAC CE, an autonomous uplink (AUL) confirmation MAC CE, and a sidelink buffer status report (BSR) MAC CE.

For the SR, as long as there is one pending SR, a MAC entity will perform following operations for each pending SR:
1) If the MAC entity does not configure a valid PUCCH resource for the pending SR, then a random access procedure on a SpCell will be triggered and the pending SR will be canceled.
2) If the MAC entity configures a valid PUCCH resource for the pending SR, an SR corresponding to the pending SR will be configured.

If the MAC entity has one SR transmission opportunity on the valid PUCCH resource configured for the SR, and *sr-ProhibitTimer* (a prohibit timer) does not run at the time corresponding to the SR transmission opportunity, and there is no overlap between the PUCCH resource for SR transmission and a measurement gap and there is no overlap between the PUCCH resource for SR transmission and a UL-SCH resource, then the following two situations will occur.

Situation one: if *SR_COUNTER* (SR counter) < *sr-TransMax* (the maximum number of transmissions for the SR), following operations will be performed:
increasing *SR_COUNTER* by 1;
indicating a physical layer to send the SR on the valid PUCCH resource corresponding to the SR; and
turning on *sr-ProhibitTimer.*

Situation two: if *SR_COUNTER≥sr-TransMax,* following operations will be performed:
informing radio resource control (RRC) to release the PUCCH for each serving cell;
informing the RRC to release SRS for each serving cell;
clearing all configured downlink resource allocation and uplink resource authorization; and
triggering the random access procedure on the SpCell and canceling all pending SRs.

FIG. 2 is a schematic flow diagram of a method for processing a scheduling request in accordance with an embodiment of the present application. As shown in FIG. 2, the method for processing the scheduling request includes following steps.

In step 201, a MAC layer indicates a physical layer to send a first scheduling request.

In the embodiment of the present application, the MAC layer may also be called a MAC entity, and a physical (PHY) layer may also be called a physical entity.

In the embodiment of the present application, a communication module of a terminal implements the MAC layer and the physical layer. Here, the terminal may be any device that can communicate with a network, such as a mobile phone, a tablet computer, a palmtop computer, a vehicle-mounted terminal, a wearable device, an industrial terminal, etc.

It should be noted that sending the scheduling request is a way for the terminal to apply for resources from a network side for new data transmission. The scheduling request belongs to information of the physical layer, the action of the terminal sending the scheduling request itself does not need RB resources, and the scheduling request may be transmitted through a PUCCH. Most of the time, in order to obtain uplink RB resources, the terminal needs to send the scheduling request many times to apply for the RB resources. When the terminal triggers one scheduling request, the scheduling request is in a pending state, which means that the terminal is ready to send, but has not yet sent, the scheduling request to the network side. As for *sr-ProhibitTimer: sr-ProhibitTimer* is used for monitoring SR signals transmitted in the PUCCH, and when the timer is running, the SR cannot be sent; once the timer expires, the terminal may resend the SR until the maximum number of transmissions *dsr-TransMax* is reached. A value of *sr-ProhibitTimer* is configured by RRC and sent to the terminal in a MAC*-MainConfig* information element. The introduction of *sr-ProhibitTimer* decreases a load on the PUCCH greatly. Since there is a concept of the maximum number of transmissions *dsr-TransMax,* it is necessary to have one variable to record the number of transmissions of the current SR. The variable is recorded as *SR_COUNTER* in the protocol. If one SR is triggered and at the same time no other SRs are in the pending state, then the terminal will set *SR_COUNTER* to 0.

In an embodiment of the present application, after the MAC layer indicates the physical layer to send the first scheduling request, the physical layer determines, according to a first rule, at least one of:
a scheduling request needing to be transmitted;
a priority of uplink control information; and
a priority of an uplink control channel.

Here, the physical layer determines, according to the first rule, which scheduling request will be transmitted and/or which UCI has a higher priority and/or which PUCCH has a higher priority and/or which UCI will be transmitted and/or which PUCCH resource will be used and/or whether traffic channel data or control channel information will be transmitted.

In the above scheme, the first rule includes at least one of:
first information;
preferentially processing a first scheduling request finally indicated by the MAC layer;
preferentially processing a first scheduling request firstly indicated by the MAC layer; and
second information from the network.

In an embodiment of the present application, the MAC layer indicates the first information to the physical layer. For example, the MAC layer indicates the first information to the physical layer while indicating the physical layer to send the scheduling request.

In the above scheme, the first information includes at least one of following information corresponding to the first scheduling request:
pre-emption indication information;
service type information;
service priority information;
logical channel information;
logical channel priority information;
logical channel group information;
logical channel group priority information; and
first service indication information.

In the above scheme, the first information includes at least one of following information corresponding to the first scheduling request:
pre-emption indication information;
service type information;
service priority information;
logical channel information;
logical channel priority information;
logical channel group information;
logical channel group priority information;
first service indication information;
priority information; and
priority level information.

Here, the service priority information may be explicit priority level information or implicit priority indication information (a priority level is determined based on the priority indication information).

Here, the logical channel and/or logical channel group priority information may be explicit priority level information or implicit priority indication information (a priority level is determined based on the priority indication information).

Optionally, the first information may be contained in HARQ information, or be indicated to the physical layer while the MAC layer indicates the physical layer to send a grant and the HARQ information.

In the above scheme, the second information may be the same as or different from the first information. The second information includes, but is not limited to, at least one of pre-emption indication information, UCI priority information, traffic channel priority information, control channel priority information, bearable service information, bearable logical channel information, bearable logical channel group information, and resource attribute information (such as PUSCH transmission duration information).

In the embodiment of the present application, the MAC layer indicates the physical layer to send the first scheduling request in the following two scenarios.

The first scenario is a scenario where transmission resources of multiple pieces of UCIs overlap.

In a case that a first condition is met, the MAC layer indicates the physical layer to send the first scheduling request.

In the embodiment of the present application, the MAC layer determines the first condition according to at least one of a priority of a logical channel triggering the scheduling request, an identifier of a logical channel triggering the scheduling request, a priority of a service triggering the scheduling request, an identifier of a service triggering the scheduling request, an identifier of a service corresponding to UCI, a priority corresponding to UCI, a priority corresponding to a configured physical uplink shared channel (PUSCH) grant, a priority of a logical channel to be transmitted, an identifier of a logical channel to be transmitted, an identifier/a priority of a service to be transmitted, an identifier/a priority of a service/data /a MAC CE/a logical channel carried by a PUSCH, the second information from the network, and a priority/an identifier of a logical channel/a service/data to be transmitted triggering a PRACH.

Optionally, for "a priority of a logical channel to be transmitted, an identifier of a logical channel to be transmitted, an identifier/a priority of a service to be transmitted, an identifier/a priority of a service/data/a MAC CE/a logical channel carried by a PUSCH" in the above scheme, the service/the logical channel/the data therein refers to a service/a logical channel/data with the highest priority or priority level.

Specifically, the MAC layer determines the first condition according to at least one of a priority of a logical channel triggering the scheduling request, an identifier of a logical channel triggering the scheduling request, a priority of a service triggering the scheduling request, an identifier of a service triggering the scheduling request, an identifier of a service corresponding to uplink control information (UCI), a priority corresponding to UCI, a priority corresponding to a configured physical uplink shared channel (PUSCH) grant, a priority of a logical channel to be transmitted, an identifier of a logical channel to be transmitted, an identifier of a service to be transmitted, a priority of a service to be transmitted, an identifier of a service carried by a PUSCH, a priority of a service carried by a PUSCH, an identifier of data carried by a PUSCH, a priority of data carried by a PUSCH, an identifier of a MAC CE carried by a PUSCH, a priority of a MAC CE carried by a PUSCH, an identifier of a logical channel carried by a PUSCH, a priority of a logical channel carried by a PUSCH, the second information from the network, a priority of a logical channel triggering a PRACH, an identifier of a logical channel triggering a PRACH, a priority of a service triggering a PRACH, an identifier of a service triggering a PRACH, a priority of data to be transmitted triggering a PRACH, and an identifier of data to be transmitted triggering a PRACH.

In an embodiment, the first condition includes at least one of:
that an uplink control channel resource transmitting the first scheduling request overlaps with an uplink control channel resource transmitting a second scheduling request, and a priority of a logical channel and/or logical channel group for the first scheduling request is higher than a priority of a logical channel and/or logical channel group for the second scheduling request, the first scheduling request and the second scheduling request being pending scheduling requests;
that an uplink control channel resource transmitting the first scheduling request overlaps with an uplink control channel resource transmitting a second scheduling request, and a priority of a service corresponding to the first scheduling request is higher than a priority of a service corresponding to the second scheduling request, the first scheduling request and the second scheduling request being pending scheduling requests;
that an uplink control channel resource transmitting the first scheduling request overlaps with an uplink control channel resource transmitting a second scheduling request, and a service type corresponding to the first scheduling request is a high reliability and low latency service, the first scheduling request and the second scheduling request being pending scheduling requests;
that an uplink control channel resource transmitting the first scheduling request overlaps with an uplink control channel resource transmitting a second scheduling request, and a priority of a logical channel and/or logical channel group for the first scheduling request is not lower than a priority of a logical channel and/or logical channel group for the second scheduling request, the first scheduling request and the second scheduling request being pending scheduling requests;
that an uplink control channel resource transmitting the first scheduling request overlaps with an uplink control channel resource transmitting a second scheduling request, and a priority of a service corresponding to the first scheduling request is not lower than a priority of a service corresponding to the second scheduling request, the first scheduling request and the second scheduling request being pending scheduling requests;
that an uplink control channel resource transmitting the first scheduling request overlaps with an uplink control channel resource transmitting a third scheduling request, and a priority of a logical channel and/or logical channel group for the first scheduling request is higher than a priority of a logical channel and/or logical channel group for the third scheduling request, the first scheduling request being a pending scheduling request, and the third scheduling request being a scheduling request which the physical layer has been indicated to transmit;
that an uplink control channel resource transmitting the first scheduling request overlaps with an uplink control channel resource transmitting a third scheduling request, and a priority of a service for the first scheduling request is higher than a priority of a service for the third scheduling request, the first scheduling request being a pending scheduling request, and the third scheduling request being a scheduling request which the physical layer has been indicated to transmit;
that an uplink control channel resource transmitting the first scheduling request overlaps with an uplink control channel resource transmitting a third scheduling request, and a service type corresponding to the first scheduling request is a high reliability and low latency service, the first scheduling request being a pending scheduling request, and the third scheduling request being a scheduling request which the physical layer has been indicated to transmit;
that an uplink control channel resource transmitting the first scheduling request overlaps with an uplink control channel resource transmitting a third scheduling request, and a priority of a logical channel and/or logical channel group for the first scheduling request is not lower than a priority of a logical channel and/or logical channel group for the third scheduling request, the first scheduling request being a pending scheduling request, and the third scheduling request being a scheduling request which the physical layer has been indicated to transmit;
that an uplink control channel resource transmitting the first scheduling request overlaps with an uplink control channel resource transmitting a third scheduling request, and a priority of a service corresponding to the first scheduling request is not lower than a priority of a service corresponding to the third scheduling request, the first scheduling request being a pending scheduling request, and the third scheduling request being a scheduling request which the physical layer has been indicated to transmit;
that the first scheduling request is a first pending scheduling request after a previous pending scheduling request is cancelled;
that the first scheduling request is a first pending scheduling request triggered after a latest MAC protocol data unit (PDU) is packed;
that the first scheduling request is a scheduling request which the physical layer is not indicated to transmit after a previous pending scheduling request is cancelled;
that the first scheduling request is a first pending scheduling request after a previous pending scheduling request is cancelled, and a service and/or a logical channel and/or a logical channel group triggering the scheduling request correspond to a first service;
that the first scheduling request is a first pending scheduling request triggered after a latest MAC PDU is packed, and a service and/or a logical channel and/or a logical channel group triggering the scheduling request correspond to a first service; and
that the first scheduling request is a scheduling request which the physical layer is not indicated to transmit after a previous pending scheduling request is cancelled, and a service and/or a logical channel and/or a logical channel group triggering the scheduling request correspond to a first service.

In another embodiment, the first condition includes at least one of:
that an uplink control channel resource transmitting the first scheduling request overlaps with an uplink control channel resource transmitting a second scheduling request, and a priority of a logical channel and/or logical channel group for the first scheduling request is higher than a priority of a logical channel and/or logical channel group for the second scheduling request, the first scheduling request and the second scheduling request being pending scheduling requests;
that an uplink control channel resource transmitting the first scheduling request overlaps with an uplink control channel resource transmitting a second scheduling request, and a priority of a service corresponding to the first scheduling request is higher than a priority of a service corresponding to the second scheduling request, the first scheduling request and the second scheduling request being pending scheduling requests;
that an uplink control channel resource transmitting the first scheduling request overlaps with an uplink control channel resource transmitting a second scheduling request, and a service type corresponding to the first scheduling request is a high reliability and low latency service, the first scheduling request and the second scheduling request being pending scheduling requests;
that an uplink control channel resource transmitting the first scheduling request overlaps with an uplink control channel resource transmitting a second scheduling request, and a priority of a logical channel and/or logical channel group for the first scheduling request is not lower than a priority of a logical channel and/or logical channel group for the second scheduling request, the first scheduling request and the second scheduling request being pending scheduling requests;
that an uplink control channel resource transmitting the first scheduling request overlaps with an uplink control channel resource transmitting a second scheduling request, and a priority of a service corresponding to the first scheduling request is not lower than a priority of a service corresponding to the second scheduling request, the first scheduling request and the second scheduling request being pending scheduling requests;
that an uplink control channel resource transmitting the first scheduling request overlaps with an uplink control channel resource transmitting a third scheduling request, and a priority of a logical channel and/or logical channel group for the first scheduling request is higher than a priority of a logical channel and/or logical channel group for the third scheduling request, the first scheduling request being a pending scheduling request, and the third scheduling request being a scheduling request which the physical layer has been indicated to transmit;
that an uplink control channel resource transmitting the first scheduling request overlaps with an uplink control channel resource transmitting a third scheduling request, and a priority of a service for the first scheduling request is higher than a priority of a service for the third scheduling request, the first scheduling request being a pending scheduling request, and the third scheduling request being a scheduling request which the physical layer has been indicated to transmit;
that an uplink control channel resource transmitting the first scheduling request overlaps with an uplink control channel resource transmitting a third scheduling request, and a service type corresponding to the first scheduling request is a high reliability and low latency service, the first scheduling request being a pending scheduling request, and the third scheduling request being a scheduling request which the physical layer has been indicated to transmit;
that an uplink control channel resource transmitting the first scheduling request overlaps with an uplink control channel resource transmitting a third scheduling request, and a priority of a logical channel and/or logical channel group for the first scheduling request is not lower than a priority of a logical channel and/or logical channel group for the third scheduling request, the first scheduling request being a pending scheduling request, and the third scheduling request being a scheduling request which the physical layer has been indicated to transmit;
that an uplink control channel resource transmitting the first scheduling request overlaps with an uplink control channel resource transmitting a third scheduling request, and a priority of a service corresponding to the first scheduling request is not lower than a priority of a service corresponding to the third scheduling request, the first scheduling request being a pending scheduling request, and the third scheduling request being a scheduling request which the physical layer has been indicated to transmit;
that the first scheduling request is a first pending scheduling request after a previous pending scheduling request is cancelled;
that the first scheduling request is a first pending scheduling request triggered after a latest MAC PDU is packed;
that the first scheduling request is a scheduling request which the physical layer is not indicated to transmit after a previous pending scheduling request is cancelled;
that the first scheduling request is a first pending scheduling request after a previous pending scheduling request is cancelled, and a service and/or a logical channel and/or a logical channel group triggering the scheduling request correspond to a first service;
that the first scheduling request is a first pending scheduling request triggered after a latest MAC PDU is packed, and a service and/or a logical channel and/or a logical channel group triggering the scheduling request correspond to a first service;
that the first scheduling request is a scheduling request which the physical layer is not indicated to transmit after a previous pending scheduling request is cancelled, and a service and/or a logical channel and/or a logical channel group triggering the scheduling request correspond to a first service;
that the first scheduling request is a scheduling request triggered after a MAC PDU is packed;
that the first scheduling request is a scheduling request triggered after a MAC PDU is transmitted to the physical layer;
that the first scheduling request is a scheduling request triggered after a MAC PDU is transmitted;
that an uplink control channel resource transmitting the first scheduling request overlaps or partially overlaps with a first uplink data channel resource, and a length of the first uplink data channel resource is greater than or equal to a first threshold value;
that LCP mapping restriction configured for a logical channel triggering the first scheduling request is not met;
that a first uplink data channel resource does not match LCP mapping restriction configured for a logical channel triggering the first scheduling request;
that an attribute of a first uplink data channel resource does not match LCP mapping restriction configured for a logical channel triggering the first scheduling request;
that a first uplink data channel resource does not meet LCP mapping restriction configured for a logical channel triggering the first scheduling request;
that an attribute of a first uplink data channel resource does not meet LCP mapping restriction configured for a logical channel triggering the first scheduling request;
that a length of a first uplink data channel resource is greater than or equal to a second threshold value;
that an uplink control channel resource of the first scheduling request/the first scheduling request cannot be transmitted at the same time as the first uplink data channel resource;
that an uplink control channel resource of the first scheduling request/the first scheduling request cannot be multiplexed or piggybacked to a first uplink data channel resource;
that a service triggering the first scheduling request is a first service;
that a logical channel triggering the first scheduling request corresponds to a first service;
that a logical channel triggering the first scheduling request is a target logical channel;
that a priority of a logical channel triggering the first scheduling request is higher than a priority of a logical channel and/or a MAC CE carried by a PUSCH;
that a logical channel triggering the first scheduling request is a logical channel corresponding to a first service, and a priority of a logical channel for the first service is higher than a priority of a logical channel and/or a MAC CE carried by a PUSCH;
that a logical channel triggering the first scheduling request is a logical channel corresponding to a first service, and a priority of a logical channel for the first service is higher than a priority of a logical channel carried by a PUSCH and/or a logical channel corresponding to a MAC CE;
that a service triggering the first scheduling request is a first service, and the first scheduling request is a scheduling request triggered after a MAC PDU is packed;
that a service triggering the first scheduling request is a first service, and the first scheduling request is a scheduling request triggered after a MAC PDU is transmitted to the physical layer;
that a service triggering the first scheduling request is a first service, and in a case where an uplink control channel resource transmitting the first scheduling request overlaps or partially overlaps with a first uplink data channel resource, a length of the first uplink data channel resource is greater than or equal to a first threshold value; and
that a service triggering the first scheduling request is a first service, and LCP mapping restriction configured for a logical channel triggering the first scheduling request is not met.

The first service in the above scheme may be a high reliability and/or low latency service, an industrial Internet of Things service, a service obtaining a high QoS requirement, etc.

It should be noted that the overlap of the resources in the above scheme may be entire overlap of the resources, or partial overlap of the resources.

It should be noted that the second scheduling request in the above scheme refers to other pending scheduling requests except the first scheduling request, and the third scheduling request in the above scheme refers to other scheduling requests which have been indicated to be transmitted by the physical layer except the first scheduling request.

It should be noted that the various scheduling requests in the above schemes all belong to the UCI.

It should be noted that, in a traditional communication network, a scenario where an SR is triggered at least after the MAC PDU is packed and the SR conflicts with the PUSCH transmitting the MAC PDU will not occur usually. In the existing protocol, even if the SR is triggered, it will not be sent because of the conflict with the PUSCH. While such scenario often occurs in an URLLC scenario, and SR transmission being not indicated to the physical layer will cause the network to be unable to know information timely that an URLLC service needs to transmit, resulting in that service performance such as QoS cannot be guaranteed. In addition, the existing protocol does not explain how to deal with the SR which is triggered at least after the MAC PDU is packed and conflicts with the PUSCH transmitting the MAC PDU. Therefore, this scheme improves this scenario. Specifically, when the first condition is met, the MAC layer may at least indicate to the physical layer to send the first scheduling request, so as to ensure that the network obtains transmission resources immediately and ensure service quality of service transmission. Here, the first condition may be described with reference to the previous description, and will not be repeated herein.

In the embodiment of the present application, a first resource to be transmitted is determined according to at least one of: a priority of a logical channel triggering the scheduling request, an identifier of a logical channel triggering the scheduling request, a priority of a service triggering the scheduling request, an identifier of a service triggering the scheduling request, an identifier of a service corresponding to HARQ feedback, an identifier of a logical channel corresponding to HARQ feedback, an identifier corresponding to HARQ feedback, a priority of a service corresponding to HARQ feedback, a priority of a logical channel corresponding to HARQ feedback, a priority corresponding to HARQ feedback, an identifier of a service corresponding to a CSI-RS, an identifier of a logical channel corresponding to a CSI-RS, an identifier corresponding to a CSI-RS, a priority of a service corresponding to a CSI-RS, a priority of a logical channel corresponding to a CSI-RS, a priority corresponding to a CSI-RS, the second information from the network, an identifier of a service corresponding to UCI, a priority corresponding to UCI, the first information, and a priority/an identifier of a logical channel/a service/data to be transmitted triggering a PRACH; wherein the first resource is at least one of an SR, a PUSCH, a CSI-RS, HARQ feedback, and a PRACH.

Specifically, the physical layer or the MAC layer determines the first resource to be transmitted according to at least one of: a priority of a logical channel triggering the scheduling requests, an identifier of a logical channel triggering the scheduling requests, a priority of a service triggering the scheduling requests, an identifier of a service triggering the scheduling requests, an identifier of a service corresponding to HARQ feedback, an identifier of a logical channel corresponding to HARQ feedback, an identifier corresponding to HARQ feedback, a priority of a service corresponding to HARQ feedback, a priority of a logical channel corresponding to HARQ feedback, a priority corresponding to HARQ feedback, an identifier of a service corresponding to a CSI-RS, an identifier of a logical channel corresponding to a CSI-RS, an identifier corresponding to a CSI-RS, a priority of a service corresponding to a CSI-RS, a priority of a logical channel corresponding to a CSI-RS, a priority corresponding to a CSI-RS, the second information from the network, an identifier of a service corresponding to UCI, a priority corresponding to UCI, the first information, a priority of a logical channel triggering a PRACH, an identifier of a logical channel triggering a PRACH, a priority of a service triggering a PRACH, an identifier of a service triggering a PRACH, a priority of data to be transmitted triggering a PRACH, and an identifier of data to be transmitted triggering a PRACH; wherein the first resource is at least one of an SR, a PUSCH, a CSI-RS, HARQ feedback, and a PRACH.

In the embodiment of the present application, the first resource to be transmitted is determined according to at least one of: a time point when the scheduling requests are triggered, whether a MAC PDU is packed, whether a MAC PDU is sent to the physical layer, a grant attribute, a service triggering the scheduling request, a logical channel triggering the scheduling request, a priority of a logical channel triggering the scheduling request, an identifier of a logical channel triggering the scheduling request, a priority of a service triggering the scheduling request, an identifier of a service triggering the scheduling request, an identifier of a service corresponding to HARQ feedback, an identifier of a logical channel corresponding to HARQ feedback, an identifier corresponding to HARQ feedback, a priority of a service corresponding to HARQ feedback, a priority of a logical channel corresponding to HARQ feedback, a priority corresponding to HARQ feedback, an identifier of a service corresponding to a CSI-RS, an identifier of a logical channel corresponding to a CSI-RS, an identifier corresponding to a CSI-RS, a priority of a service corresponding to a CSI-RS, a priority of a logical channel corresponding to a CSI-RS, a priority corresponding to a CSI-RS, the second information from the network, an identifier of a service corresponding to UCI, a priority corresponding to UCI, the first information, and a priority/an identifier of a logical channel/a service/data to be transmitted triggering a PRACH; wherein the first resource is at least one of a scheduling request (SR), a PUSCH, a channel state information reference signal (CSI-RS), hybrid automatic repeat request (HARQ) feedback and a PRACH.

It should be noted that, if the MAC layer is taken as a subject to make the determination in the above scheme, its basis factor may include the first information.

In addition, there is another scenario where transmission resources of the UCIs overlap, which will be described below by way of example.

For example, when the first condition is met, the MAC layer indicates the physical layer to send the first scheduling request and indicates the first information at the same time. The first scheduling request and a first HARQ-ACK resource overlap and cannot be multiplexed, and the physical layer determines which UCI will be transmitted according to the first rule.

As another example, the MAC layer indicates the physical layer to send the first scheduling request and indicates the first information at the same time. The first scheduling request and the first HARQ-ACK resource overlap and cannot be multiplexed, and the physical layer determines which UCI will be transmitted according to the first rule.

As another example, the MAC layer indicates the physical layer to send the first scheduling request. The first scheduling request and a first CSI-RS resource overlap and cannot be multiplexed, and the physical layer determines which UCI will be transmitted according to the first rule.

The second scenario is a scenario where the transmission resources of the UCI and a PUSCH overlap, or the transmission resources of the UCI and a PRACH overlap.

In an embodiment, in a case where an uplink control channel resource transmitting the first scheduling request overlaps or partially overlaps with a first uplink data channel resource, if a logical channel corresponding to a first service triggers the first scheduling request, and a priority of the first service is higher than a priority of a service transmitted on a first uplink data channel or a priority of the first service is higher than a priority of a service corresponding to a MAC CE, such as a buffer status report media access control control element (BSR MAC CE), carried by the first uplink data channel, and/or
in a case where an uplink control channel resource transmitting the first scheduling request overlaps or partially overlaps with a first uplink data channel resource, if a logical channel corresponding to a first service triggers the first scheduling request, and a priority of the first service is the same as a priority of a service transmitted on a first uplink data channel or a priority of the first service is the same as a priority of a service corresponding to a MAC CE, such as a BSR MAC CE, carried by the first uplink data channel, then
the MAC layer indicates the physical layer to send the first scheduling request; and/or
the MAC layer indicates to the physical layer that the first scheduling request or the uplink control channel resource corresponding to the first scheduling request is transmitted preferentially; and/or
the MAC layer indicates a service type corresponding to the first scheduling request to the physical layer; and/or
the MAC layer indicates logical channel information corresponding to the first scheduling request to the physical layer; and/or
the MAC layer indicates the first information to the physical layer.

In another embodiment, in a case where an uplink control channel resource transmitting the first scheduling request overlaps or partially overlaps with a first uplink data channel resource, if a logical channel corresponding to a first service triggers the first scheduling request, and a priority of the first service is higher than a priority of a service transmitted on a first uplink data channel or a priority of the first service is higher than a priority of a service corresponding to a BSR MAC CE carried by the first uplink data channel, and/or
in a case where an uplink control channel resource transmitting the first scheduling request overlaps or partially overlaps with a first uplink data channel resource, if a logical channel corresponding to a first service triggers the first scheduling request, and a priority of the first service is the same as a priority of a service transmitted on a first uplink data channel or a priority of the first service is the same as a priority of a service corresponding to a BSR MAC CE carried by the first uplink data channel, and/or
the first scheduling request is a scheduling request triggered after a MAC PDU is packed, and/or
the first scheduling request is a scheduling request triggered after a MAC PDU is transmitted to the physical layer, and/or
the first scheduling request is a scheduling request triggered after a MAC PDU is transmitted, and/or
an uplink control channel resource transmitting the first scheduling request overlaps or partially overlaps with a first uplink data channel resource, and a length of the first uplink data channel resource is greater than or equal to a first threshold value, and/or
LCP mapping restriction configured for a logical channel triggering the first scheduling request is not met, and/or
a first uplink data channel resource does not match LCP mapping restriction configured for a logical channel triggering the first scheduling request, and/or
an attribute of a first uplink data channel resource does not match LCP mapping restriction configured for a logical channel triggering the first scheduling request, and/or
a first uplink data channel resource does not meet LCP mapping restriction configured for a logical channel triggering the first scheduling request, and/or
an attribute of a first uplink data channel resource does not meet LCP mapping restriction configured for a logical channel triggering the first scheduling request, and/or
a length of a first uplink data channel resource is greater than or equal to a second threshold value, and/or
an uplink control channel resource of the first scheduling request/the first scheduling request and a first uplink data channel resource cannot be transmitted at the same time, and/or
an uplink control channel resource of the first scheduling request/the first scheduling request cannot be multiplexed or piggybacked to a first uplink data channel resource, and/or
a service triggering the first scheduling request is a first service, and/or
a logical channel triggering the first scheduling request corresponds to a first service, and/or
a logical channel triggering the first scheduling request is a target logical channel, and/or
a priority of a logical channel triggering the first scheduling request is higher than a priority of a logical channel and/or a MAC CE carried by a PUSCH, and/or
a logical channel triggering the first scheduling request is a logical channel corresponding to a first service, and a priority of a logical channel of the first service is higher than a priority of a logical channel and/or a MAC CE carried by a PUSCH, and/or
a logical channel triggering the first scheduling request is a logical channel corresponding to a first service, and a priority of a logical channel of the first service is higher than a priority of a logical channel carried by a PUSCH and/or a logical channel corresponding to a MAC CE, then
the MAC layer indicates the physical layer to transmit the first scheduling request; and/or
the MAC layer indicates the physical layer to transmit preferentially the first scheduling request or the uplink control channel resource corresponding to the first scheduling request; and/or
the MAC layer indicates a service type corresponding to the first scheduling request to the physical layer; and/or
the MAC layer indicates logical channel information corresponding to the first scheduling request to the physical layer; and/or
the MAC layer sends third information to the physical layer according to an indication from the physical layer, wherein the third information is information which the MAC layer is indicated by the physical layer to send.

The first service in the above scheme may be a high reliability and/or low latency service, an industrial Internet of Things service, a service obtaining a high QoS requirement, etc.

In the embodiment of the present application, whether the first scheduling request or the first uplink data channel or the PRACH is transmitted is determined according to at least one of a priority/identifier of the first service, a priority/identifier of a logical channel carrying the first service, a priority/identifier of a logical channel group carrying the first service, an identifier/priority of a logical channel/a service to be transmitted, a priority of a service/a logical channel/data carried on the first uplink data channel, a priority of a MAC CE carried on the first uplink data channel or a priority/identifier of a logical channel/a service/data corresponding to a MAC CE, a priority of a logical channel triggering the first scheduling request, an identifier of a logical channel triggering the first scheduling request, a priority/identifier of a service/data corresponding to a logical channel triggering the first scheduling request, an identifier of a service/a logical channel/data carried on the first uplink data channel, the second information from the network, a priority/identifier of a logical channel/a service/data to be transmitted triggering the PRACH, and the first information.

Optionally, for "an identifier/priority of a logical channel/a service to be transmitted, a priority of a service/a logical channel/data carried on the first uplink data channel, a priority of a MAC CE carried on the first uplink data channel or a priority/identifier of a logical channel/a service/data corresponding to a MAC CE" and "a service/a logical channel/data carried on the first uplink data channel", the service/the logical channel/the data therein refers to a service/a logical channel/data with the highest priority or priority level.

Specifically, the physical layer or MAC layer determines whether the first scheduling request or the first uplink data channel or the PRACH is transmitted according to at least one of a priority of the first service, an identifier of the first service, a priority of a logical channel carrying the first service, an identifier of a logical channel carrying the first service, a priority of a logical channel group carrying the first service, an identifier of a logical channel group carrying the first service, an identifier of a logical channel to be transmitted, a priority of a logical channel to be transmitted, an identifier of a service to be transmitted, a priority of a service to be transmitted, a priority of a service carried on the first uplink data channel, an identifier of a service carried on the first uplink data channel, a priority of data carried on the first uplink data channel, a identifier of data carried on the first uplink data channel, a priority of a logical channel carried on the first uplink data channel, an identifier of a logical channel carried on the first uplink data channel, a priority of a MAC CE carried on the first uplink data channel, a priority of a logical channel corresponding to a MAC CE carried on the first uplink data channel, an identifier of a logical channel corresponding to a MAC CE carried on the first uplink data channel, a priority of a service corresponding to a MAC CE carried on the first uplink data channel, an identifier of a service corresponding to a MAC CE carried on the first uplink data channel, a priority of data corresponding to a MAC CE carried on the first uplink data channel, an identifier of data corresponding to a MAC CE carried on the first uplink data channel, a priority of a logical channel triggering the first scheduling request, an identifier of a logical channel triggering the first scheduling request, a priority of a service corresponding to a logical channel triggering the first scheduling request, an identifier of a service corresponding to a logical channel triggering the first scheduling request, a priority of data corresponding to a logical channel triggering the first scheduling request, an identifier of data corresponding to a logical channel triggering the first scheduling request, an identifier of a service carried on the first uplink data channel, an identifier of a logical channel carried on the first uplink data channel, an identifier of data carried on the first uplink data channel, the second information from the network, the first information, a priority of a logical channel triggering the PRACH, an identifier of a logical channel triggering the PRACH, a priority of triggering the PRACH, a priority of a service triggering the PRACH, an identifier of a service triggering the PRACH, a priority of data to be transmitted triggering the PRACH, and an identifier of data to be transmitted triggering the PRACH.

It should be noted that, if the physical layer is taken as the subject to make the determination in the above scheme, its basis factor may include the first information.

In another embodiment, in a case where an uplink control channel resource transmitting the first scheduling request overlaps or partially overlaps with a first uplink data channel resource, if a logical channel corresponding to a first service triggers the first scheduling request, and a priority of the first service or a priority of a logical channel corresponding to the first service is higher than a priority of a service/data/a logical channel transmitted on the first uplink data channel, or a priority of the first service or a priority of a logical channel corresponding to the first service is higher than a priority of a MAC CE carried by the first uplink data channel or a priority of a service/data/a logical channel corresponding to a MAC CE, and/or
in a case where an uplink control channel resource transmitting the first scheduling request overlaps or partially overlaps with a first uplink data channel resource, if a logical channel corresponding to a first service triggers the first scheduling request and a priority of the first service or a priority of a logical channel corresponding to the first service is the same as a priority of a service/data/a logical channel transmitted on the first uplink data channel, or a priority of the first service or a priority of a logical channel corresponding to the first service is the same as a priority of a MAC CE carried by the first uplink data channel or a priority of a service/data/a logical channel corresponding to a MAC CE, then
the MAC layer indicates the physical layer to transmit the first scheduling request and/or
the MAC layer indicates the physical layer to transmit preferentially the first scheduling request or the uplink control channel resource corresponding to the first scheduling request; and/or
the MAC layer indicates a service type corresponding to the first scheduling request to the physical layer; and/or
the MAC layer indicates logical channel information corresponding to the first scheduling request to the physical layer; and/or
the MAC layer indicates the first information to the physical layer.

In the above scheme, the service/data/logical channel refers to a service or data or a logical channel.

In the embodiment of the present application, whether the first scheduling request or the first uplink data channel or the PRACH is transmitted is determined according to at least one of a priority/identifier of the first service, a priority/identifier of a logical channel carrying the first service, a priority/identifier of a logical channel group carrying the first service, an identifier/priority of a logical channel/a service to be transmitted, a priority/identifier of a service/a logical channel/data carried on the first uplink data channel, a priority of a MAC CE carried on the first uplink data channel or a priority/identifier of a logical channel/a service/data corresponding to a MAC CE, a priority of a logical channel triggering the first scheduling request, an identifier of a logical channel triggering the first scheduling request, a priority/identifier of a service/data corresponding to a logical channel triggering the first scheduling request, an identifier of a service/a logical channel/data carried on the first uplink data channel, the second information from the network, a priority/identifier of a logical channel/a service/data to be transmitted triggering the PRACH, and the first information.

Optionally, for "an identifier/priority of a logical channel/a service to be transmitted, a priority of a service/a logical channel/data carried on the first uplink data channel, a priority of a MAC CE carried on the first uplink data channel or a priority/identifier of a logical channel/a service/data corresponding to MAC CE" and "an identifier of a service/a logical channel/data carried on the first uplink data channel", the service/the logical channel/the data therein refers to a service/a logical channel/data with the highest priority or priority level.

Specifically, the physical layer or MAC layer determines whether to transmit the first scheduling request or the first uplink data channel or the PRACH according to at least one of a priority of the first service, an identifier of the first service, a priority of a logical channel carrying the first service, an identifier of a logical channel carrying the first service, a priority of a logical channel group carrying the first service, an identifier of a logical channel group carrying the first service, an identifier of a logical channel to be transmitted, a priority of a logical channel to be transmitted, an identifier of a service to be transmitted, a priority of a service to be transmitted, a priority of a service carried on the first uplink data channel, an identifier of a service carried on the first uplink data channel, a priority of data carried on the first uplink data channel, an identifier of data carried on the first uplink data channel, a priority of a logical channel carried on the first uplink data channel, an identifier of a logical channel carried on the first uplink data channel, a priority of a MAC CE carried on the first uplink data channel, a priority of a logical channel corresponding to a MAC CE carried on the first uplink data channel, an identifier of a logical channel corresponding to a MAC CE carried on the first uplink data channel, a priority of a service corresponding to a MAC CE carried on the first uplink data channel, an identifier of a service corresponding to a MAC CE carried on the first uplink data channel, a priority of data corresponding to a MAC CE carried on the first uplink data channel, an identifier of data corresponding to a MAC CE carried on the first uplink data channel, a priority of a logical channel triggering the first scheduling request, an identifier of a logical channel triggering the first scheduling request, a priority of a service corresponding to a logical channel triggering the first scheduling request, an identifier of a service corresponding to a logical channel triggering the first scheduling request, a priority of data corresponding to a logical channel triggering the first scheduling request, an identifier of data corresponding to a logical channel triggering the first scheduling request, an identifier of a service carried on the first uplink data channel, an identifier of a logical channel carried on the first uplink data channel, an identifier of data carried on the first uplink data channel, the second information from the network, the first information, a priority of a logical channel triggering the PRACH, an identifier of a logical channel triggering the PRACH, a priority of triggering the PRACH, a priority of a service triggering the PRACH, an identifier of a service triggering the PRACH, a priority of data to be transmitted triggering the PRACH, and an identifier of data to be transmitted triggering the PRACH.

It should be noted that, if the physical layer is taken as a subject to make the determination in the above scheme, its basis factor may include the first information.

In the above scheme, the MAC CE may be but not limited to a BSR MAC CE.

Optionally, the above scheme may also be applied to all scenarios where the UCI conflicts/overlaps with the PUSCH/PRACH, such as the HARQ feedback conflicts with the PUSCH, the CSI-RS conflicts with the PUSCH, the SRs conflicts with the PRACH (e.g., an SR triggered by a URLLC service conflicts with an SR PRACH triggered by an eMBB service, and an SR triggered by a URLLC service conflicts with the PRACH triggered by BFR), and the HARQ feedback conflicts with the PRACH.

In the above scheme, the first service includes at least one of a high reliability and low latency service, an industrial Internet of Things service, a vertical industry service, an Internet of Vehicles service, and a service in a time-sensitive network. It should be noted that the first scheduling request in the above scheme belongs to the UCI, and the first uplink data channel is, for example, the PUSCH.

The technical schemes of the embodiments of the present application will be further described below in combination with specific application examples. It should be noted that a MAC entity in the following application examples refers to the MAC layer in the above embodiments.

### Application example 1

As long as there is one pending SR, the MAC entity will perform following operations for each pending SR:
1) If the MAC entity does not configure a valid PUCCH resource for the pending SR, then a random access procedure on a SpCell will be triggered and the pending SR will be canceled.
2) If the MAC entity configures a valid PUCCH resource for the pending SR, an SR corresponding to the pending SR will be configured as follows.

If the MAC entity has one SR transmission opportunity on the valid PUCCH resource configured for the SR, and *sr-ProhibitTimer* does not run at the time corresponding to the SR transmission opportunity, and there is no overlap between the PUCCH resource for SR transmission and a measurement gap and there is no overlap between the PUCCH resource for SR transmission and a UL-SCH resource, then the following two situations will occur.

Situation one: if *SR_COUNTER < sr-TransMax,* following operations will be performed:
increasing *SR_COUNTER* by 1;
indicating the physical layer to send the SR on the valid PUCCH resource corresponding to the SR;
indicating the first information to the physical layer; and
turning on *sr-ProhibitTimer.*

Situation two: if *SR_COUNTER≥sr-TransMax,* following operations will be performed:
informing radio resource control (RRC) to release the PUCCH for each serving cell;
informing the RRC to release SRS for each serving cell;
clearing all configured downlink resource allocation and uplink resource authorization; and
triggering the random access procedure on the SpCell and canceling all pending SRs.

In the above scheme, the first information includes, but is not limited to, at least one of:
pre-emption indication information;
priority information corresponding to the pending SR, such as priority level and priority indication;
service type information corresponding to the pending SR;
logical channel priority information;
logical channel information;
logical channel group priority information;
logical channel group information; and
first service indication information.

### Application example 2

As long as there is one pending SR, the MAC entity will perform following operations for each pending SR:
1) If the MAC entity does not configure a valid PUCCH resource for the pending SR, then a random access procedure on a SpCell will be triggered and the pending SR will be canceled.
2) If the MAC entity configures a valid PUCCH resource for the pending SR, an SR corresponding to the pending SR will be configured as follows.

If the MAC entity has one SR transmission opportunity on the valid PUCCH resource configured for the SR, and *sr-ProhibitTimer* does not run at the time corresponding to the SR transmission opportunity, and there is no overlap between the PUCCH resource for SR transmission and a measurement gap and there is no overlap between the PUCCH resource for SR transmission and a UL-SCH resource, and the first condition is met, then the following two situations will occur.

Situation one: if *SR_COUNTER < sr-TransMax,* following operations will be performed:
increasing *SR_COUNTER* by 1;
indicating to the physical layer to send the SR on the valid PUCCH resource corresponding to the SR; and
turning on *sr-ProhibitTimer.*

Situation two: if *SR_COUNTER≥sr-TransMax,* following operations will be performed:
informing RRC to release the PUCCH for each serving cell;
informing the RRC to release SRS for each serving cell;
clearing all configured downlink resource allocation and uplink resource authorization; and
triggering the random access procedure on the SpCell and canceling all pending SRs.

In the above scheme, the first condition includes, but is not limited to, at least one of:
that a PUCCH resource transmitting the SR overlaps with PUCCH resources corresponding to other pending SRs, and a priority of a logical channel of the pending SR is higher than priorities of other pending SRs;
that a PUCCH resource transmitting the SR overlaps with PUCCH resources corresponding to other pending SRs, and a priority of a service corresponding to the pending SR is higher than priorities of other pending SRs;
that a PUCCH resource transmitting the SR overlaps with PUCCH resources corresponding to other pending SRs, and the pending SR corresponds to a service with high reliability and low latency;
that a PUCCH resource transmitting the SR overlaps with PUCCH resources corresponding to other pending SRs, and a priority of a logical channel of the pending SR is not lower than priorities of other pending SRs;
that a PUCCH resource transmitting the SR overlaps with PUCCH resources corresponding to other pending SRs, and a priority of a service corresponding to the pending SR is not lower than priorities of other pending SRs;
that a PUCCH resource transmitting the SR overlaps with PUCCH resources corresponding to other SRs which have been indicated to be transmitted by the physical layer, and a priority of a logical channel of the pending SR is higher than priorities of other pending SRs;
that a PUCCH resource transmitting the SR overlaps with PUCCH resources corresponding to other SRs which have been indicated to be transmitted by the physical layer, and a priority of a service corresponding to the pending SR is higher than priorities of other pending SRs;
that a PUCCH resource transmitting the SR overlaps with PUCCH resources corresponding to other SRs which have been indicated to be transmitted by the physical layer, and the pending SR corresponds to a service with high reliability and low latency;
that a PUCCH resource transmitting the SR overlaps with PUCCH resources corresponding to other SRs which have been indicated to be transmitted by the physical layer, and a priority of a logical channel of the pending SR is not lower than priorities of other pending SRs;
that a PUCCH resource transmitting the SR overlaps with PUCCH resources corresponding to other SRs which have been indicated to be transmitted by the physical layer, and a priority of a service corresponding to the pending SR is not lower than priorities of other pending SRs;
the SR is a first pending SR after a previous pending SR is cancelled; and
there is no SR to be indicated to be transmitted by the physical layer after a previous pending SR is cancelled.

Optionally, the above application example 1 may be used by superimposing over the scheme of the application example 2.

### Application example 3

As long as there is one pending SR, the MAC entity will perform following operations for each pending SR:
1) If the MAC entity does not configure a valid PUCCH resource for the pending SR, then a random access procedure on a SpCell will be triggered and the pending SR will be canceled.
2) If the MAC entity configures a valid PUCCH resource for the pending SR, an SR corresponding to the pending SR will be configured.

If the MAC entity has one SR transmission opportunity on the valid PUCCH resource configured for the SR, and *sr-ProhibitTimer* does not run at the time corresponding to the SR transmission opportunity, and there is no overlap between the PUCCH resource for SR transmission and a measurement gap and there is no overlap between the PUCCH resource for SR transmission and a UL-SCH resource, then the following two situations will occur.

Situation one: if *SR_COUNTER < sr-TransMax,* following operations will be performed:
increasing *SR_COUNTER* by 1;
indicating the physical layer to send the SR on the valid PUCCH resource corresponding to the SR if the first condition is met; and
turning on *sr-ProhibitTimer.*

Situation two: if *SR_COUNTER≥sr-TransMax,* following operations will be performed:
informing RRC to release the PUCCH for each serving cell;
informing the RRC to release SRs for each serving cell;
clearing all configured downlink resource allocation and uplink resource authorization; and
triggering the random access procedure on the SpCell and canceling all pending SRs.

Alternatively, as long as there is one pending SR, the MAC entity will perform following operations for each pending SR:
1) If the MAC entity does not configure a valid PUCCH resource for the pending SR, then a random access procedure on a SpCell will be triggered and the pending SR will be canceled.
2) If the MAC entity configures a valid PUCCH resource for the pending SR, an SR corresponding to the pending SR will be configured.

If the MAC entity has one SR transmission opportunity on the valid PUCCH resource configured for the SR, and *sr-ProhibitTimer* does not run at the time corresponding to the SR transmission opportunity, and there is no overlap between the PUCCH resource for SR transmission and a measurement gap and there is no overlap between the PUCCH resource for SR transmission and a UL-SCH resource, then the following two situations will occur.

Situation one: if *SR_COUNTER < sr-TransMax,* following operations will be performed:
increasing *SR_COUNTER* by 1;
indicating the physical layer to send the SR on the valid PUCCH resource corresponding to the SR if the first condition is met; and
turning on *sr-ProhibitTimer* if the first condition is met.

It should be noted that "if the first condition is met" herein is not limited to ways described above, and "if the first condition is met" herein may be used as a precondition for any one or more of the following operations:
increasing *SR_COUNTER* by 1;
indicating the physical layer to send the SR on the valid PUCCH resource corresponding to the SR; and
turning on *sr-ProhibitTimer.*

Situation two: if *SR_COUNTER≥sr-TransMax,* following operations will be performed:
informing RRC to release the PUCCH for each serving cell;
informing the RRC to release SRs for each serving cell;
clearing all configured downlink resource allocation and uplink resource authorization; and
triggering the random access procedure on the SpCell and canceling all pending SRs.

In the above scheme, the first condition includes, but is not limited to, at least one of:
that a PUCCH resource transmitting the SR overlaps with PUCCH resources corresponding to other pending SRs, and a priority of a logical channel of the pending SR is higher than priorities of other pending SRs;
that a PUCCH resource transmitting the SR overlaps with PUCCH resources corresponding to other pending SRs, and a priority of a service corresponding to the pending SR is higher than priorities of other pending SRs;
that a PUCCH resource transmitting the SR overlaps with PUCCH resources corresponding to other pending SRs, and the pending SR corresponds to a service with high reliability and low latency;
that a PUCCH resource transmitting the SR overlaps with PUCCH resources corresponding to other pending SRs, and a priority of a logical channel of the pending SR is not lower than priorities of other pending SRs;
that a PUCCH resource transmitting the SR overlaps with PUCCH resources corresponding to other pending SRs, and a priority of a service corresponding to the pending SR is not lower than priorities of other pending SRs;
that a PUCCH resource transmitting the SR overlaps with PUCCH resources corresponding to other SRs which the physical layer has been indicated to transmit, and a priority of a logical channel of the pending SR is higher than priorities of other pending SRs;
that a PUCCH resource transmitting the SR overlaps with PUCCH resources corresponding to other SRs which the physical layer has been indicated to transmit, and a priority of a service corresponding to the pending SR is higher than priorities of other pending SRs;
that a PUCCH resource transmitting the SR overlaps with PUCCH resources corresponding to other SRs which the physical layer has been indicated to transmit, and the pending SR corresponds to a service with high reliability and low latency;
that a PUCCH resource transmitting the SR overlaps with PUCCH resources corresponding to other SRs which the physical layer has been indicated to transmit, and a priority of a logical channel of the pending SR is not lower than priorities of other pending SRs;
that a PUCCH resource transmitting the SR overlaps with PUCCH resources corresponding to other SRs which the physical layer has been indicated to transmit, and a priority of a service corresponding to the pending SR is not lower than priorities of other pending SRs;
the SR is a first pending SR after a previous pending SR is cancelled; and
there is no SR to be indicated to be transmitted by the physical layer after a previous pending SR is cancelled.

Optionally, the above application example 1 may be used by superimposing over the scheme of the application example 3.

### Application example 4

The physical layer determines, according to the first rule, which SR will be transmitted and/or which UCI has a higher priority and/or which PUCCH has a higher priority and/or which UCI will be transmitted and/or which PUCCH resource will be used and/or whether traffic channel data or control channel information will be transmitted.

For example, if the physical layer receives more than one indication for the SRs from the MAC entity, and the PUCCH resources corresponding to the SRs overlap or partially overlap in time, the physical layer considers that an SR arriving later (i.e., indicated at a later point in time) has a higher priority, or a priority of a PUCCH resource corresponding to the SR arriving later is higher.

For example, if the physical layer receives more than one indication for the SRs from the MAC entity, and the PUCCH resources corresponding to the SRs overlap or partially overlap in time, the physical layer considers that an SR arriving earlier (i.e., indicated at a earlier point in time) has a higher priority, or a priority of a PUCCH resource corresponding to the SR arriving earlier is higher.

For example, if the physical layer receives more than one indication for the SRs from the MAC entity, and the PUCCH resources corresponding to the SRs overlap or partially overlap in time, the physical layer determines, according to the first information, which SR will be transmitted and/or which SR/PUCCH resource has a higher priority and/or which UCI will be transmitted and/or which PUCCH resource will be used and/or whether traffic channel data or control channel information will be transmitted.

For example, when the UCI cannot be multiplexed, the physical layer determines, according to the first information, which SR will be transmitted and/or which UCI has a higher priority and/or which PUCCH resource has a higher priority and/or which UCI will be transmitted and/or which PUCCH resource will be used and/or whether traffic channel data or control channel information will be transmitted. The first information may be indicated by the MAC layer and/or indicated by scheduling and/or obtained through the RRC.

For example, the physical layer determines, according to a default rule, which SR will be transmitted and/or which SR/PUCCH resource has a higher priority and/or which UCI has a higher priority and/or which UCI will be transmitted and/or which PUCCH resource will be used and/or whether traffic channel data or control channel information will be transmitted.

For example, the physical layer determines, according to the second information from the network, which SR will be transmitted and/or which SR/PUCCH resource has a higher priority and/or which UCI has a higher priority and/or which UCI will be transmitted and/or which PUCCH resource will be used and/or whether traffic channel data or control channel information will be transmitted. The second information may be the same as or different from the first information content. The second information includes, but is not limited to, at least one of pre-emption indication information, UCI priority information, traffic channel priority information, control channel priority information, bearable service information, bearable logical channel information, bearable logical channel group information, and resource attribute information (such as PUSCH transmission duration information). The second information may be indicated by the DCI, carried by the MAC CE and indicated by RRC signaling. For example, the physical layer determines, according to the second information and the first information, which SR will be transmitted and/or which SR/PUCCH resource has a higher priority and/or which UCI has a higher priority and/or which UCI will be transmitted and/or which PUCCH resource will be used and/or whether traffic channel data or control channel information will be transmitted.

For example, when the SRs and HARQ-ACK overlap and the UCI cannot be multiplexed, the physical layer determines, according to the first information, which UCI has a higher priority and/or whether the SRs or HARQ-ACK will be transmitted and/or which PUCCH will be transmitted.

For example, when the SRs and the PUSCH overlap and the UCI cannot be multiplexed on the PUSCH, the physical layer determines, according to the first information, a priority of the PUSCH and PUSCH and/or a channel on which data will be transmitted.

Optionally, the application example 4 may be used by superimposing over any of the schemes of the application examples 1, 2 and 3.

### Application example 5

In a case where PUCCH resources for transmitting the SRs overlap or partially overlap with a UL-SCH resource, if a logical channel corresponding to the first service triggers the SRs and a priority of the first service is higher than a priority of a service transmitted on a UL-SCH, or a priority of the first service is higher than a priority of a service corresponding to a BSR MAC CE carried by the UL-SCH; and/or

In a case where PUCCH resources for transmitting the SRs overlap or partially overlap with a UL-SCH resource, if a logical channel corresponding to the first service triggers the SRs and a priority of the first service is the same as a priority of a service transmitted on a UL-SCH, or a priority of the first service is higher than a priority of a service corresponding to a BSR MAC CE carried by the UL-SCH, then
the MAC entity indicates to the physical layer that the SRs are transmitted, and/or indicates to the physical layer that the SRs or the PUCCH resources corresponding to the SRs are transmitted preferentially, and/or indicates a service type corresponding to the SRs to the physical layer, and/or indicates logical channel (group) information corresponding to a service corresponding to the SRs. Optionally, *SR_COUNTER* is increased by 1, and/or *sr-ProhibitTimer* is turned on.

In the above scheme, the first service includes, but is not limited to, at least one of a high reliability and low latency service, an industrial Internet of Things service, a vertical industry service, an Internet of Vehicles service, a URLLC service and a service in a time-sensitive network.

It should be understood by those skilled in the art that the embodiments of the present application are only illustrative of feasible embodiments, and do not limit other feasible embodiments.

FIG. 3 is a schematic structural diagram of a device for processing scheduling requests in accordance with an embodiment of the present application. As shown in FIG. 3, the device includes:
an indicating unit 301, configured to indicate, by a MAC layer, a physical layer to send a first scheduling request.

In an embodiment of the present application, the device further includes:
a determining unit 302, configured to determine, according to a first rule through a physical layer, at least one of:
scheduling requests needing to be transmitted;
a priority of uplink control information; and
a priority of an uplink control channel.

In an embodiment of the present application, the first rule includes at least one of:
first information;
preferentially processing a first scheduling request finally indicated by the MAC layer;
preferentially processing a first scheduling request firstly indicated by the MAC layer; and
second information from a network.

In an embodiment of the present application, the indicating unit 301 is further configured to indicate the first information to the physical layer through the MAC layer.

In an embodiment of the present application, the first information includes at least one of following information corresponding to the first scheduling request:
pre-emption indication information;
service type information;
service priority information;
logical channel information;
logical channel priority information;
logical channel group information;
logical channel group priority information; and
first service indication information.

In an embodiment of the present application, the first information includes at least one of following information corresponding to the first scheduling request:
pre-emption indication information;
service type information;
service priority information;
logical channel information;
logical channel priority information;
logical channel group information;
logical channel group priority information;
first service indication information;
priority information; and
priority level information.

In an embodiment of the present application, the indicating unit 301 is configured to indicate, by the MAC layer, the physical layer to send the first scheduling request in a case that a first condition is met.

In an embodiment of the present application, the determining unit 302 is configured to determine a first condition according to at least one of a priority of a logical channel triggering the scheduling requests, an identifier of a logical channel triggering the scheduling requests, a priority of a service triggering the scheduling requests, an identifier of a service triggering the scheduling requests, an identifier of a service corresponding to UCI, a priority corresponding to UCI, a priority corresponding to a PUSCH grant, a priority of a logical channel to be transmitted, an identifier of a logical channel to be transmitted, an identifier/a priority of a service to be transmitted, an identifier/a priority of a service/data /a MAC CE/a logical channel carried by a PUSCH, the second information from the network, and a priority/an identifier of a logical channel/a service/data to be transmitted triggering a PRACH.

In an embodiment of the present application, the determining unit 302 is configured to determine a first resource to be transmitted according to at least one of a priority of a logical channel triggering the scheduling requests, an identifier of a logical channel triggering the scheduling requests, a priority of a service triggering the scheduling requests, an identifier of a service triggering the scheduling requests, an identifier of a service corresponding to HARQ feedback, an identifier of a logical channel corresponding to HARQ feedback, an identifier corresponding to HARQ feedback, a priority of a service corresponding to HARQ feedback, a priority of a logical channel corresponding to HARQ feedback, a priority corresponding to HARQ feedback, an identifier of a service corresponding to a CSI-RS, an identifier of a logical channel corresponding to a CSI-RS, an identifier corresponding to a CSI-RS, a priority of a service corresponding to a CSI-RS, a priority of a logical channel corresponding to a CSI-RS, a priority corresponding to a CSI-RS, the second information from the network, an identifier of a service corresponding to UCI, a priority corresponding to UCI, the first information, and a priority/an identifier of a logical channel/a service/data to be transmitted triggering a PRACH; wherein the first resource is at least one of a scheduling request (SR), a PUSCH, a channel state information reference signal (CSI-RS), hybrid automatic repeat request (HARQ) feedback and a PRACH.

In an embodiment of the present application, the determining unit 302 is configured to determine the first resource to be transmitted according to at least one of a time point when the scheduling requests are triggered, whether a MAC PDU is packed, whether a MAC PDU is sent to the physical layer, a grant attribute, a service triggering the scheduling requests, a logical channel triggering the scheduling requests, a priority of a logical channel triggering the scheduling requests, an identifier of a logical channel triggering the scheduling requests, a priority of a service triggering the scheduling requests, an identifier of a service triggering the scheduling requests, an identifier of a service corresponding to HARQ feedback, an identifier of a logical channel corresponding to HARQ feedback, an identifier corresponding to HARQ feedback, a priority of a service corresponding to HARQ feedback, a priority of a logical channel corresponding to HARQ feedback, a priority corresponding to HARQ feedback, an identifier of a service corresponding to a CSI-RS, an identifier of a logical channel corresponding to a CSI-RS, an identifier corresponding to a CSI-RS, a priority of a service corresponding to a CSI-RS, a priority of a logical channel corresponding to a CSI-RS, a priority corresponding to a CSI-RS, the second information from the network, an identifier of a service corresponding to UCI, a priority corresponding to UCI, the first information, and a priority/an identifier of a logical channel/a service/data to be transmitted triggering a PRACH; wherein the first resource is at least one of a scheduling request (SR), a PUSCH, a channel state information reference signal (CSI-RS), hybrid automatic repeat request (HARQ) feedback and a PRACH.

In an embodiment of the present application, the first condition includes at least one of:
that an uplink control channel resource transmitting the first scheduling request overlaps with an uplink control channel resource transmitting a second scheduling request, and a priority of a logical channel and/or logical channel group for the first scheduling request is higher than a priority of a logical channel and/or logical channel group for the second scheduling request, the first scheduling request and the second scheduling request being pending scheduling requests;
that an uplink control channel resource transmitting the first scheduling request overlaps with an uplink control channel resource transmitting a second scheduling request, and a priority of a service corresponding to the first scheduling request is higher than a priority of a service corresponding to the second scheduling request, the first scheduling request and the second scheduling request being pending scheduling requests;
that an uplink control channel resource transmitting the first scheduling request overlaps with an uplink control channel resource transmitting a second scheduling request, and a service type corresponding to the first scheduling request is a high reliability and low latency service, the first scheduling request and the second scheduling request being pending scheduling requests;
that an uplink control channel resource transmitting the first scheduling request overlaps with an uplink control channel resource transmitting a second scheduling request, and a priority of a logical channel and/or logical channel group for the first scheduling request is not lower than a priority of a logical channel and/or logical channel group for the second scheduling request, the first scheduling request and the second scheduling request being pending scheduling requests;
that an uplink control channel resource transmitting the first scheduling request overlaps with an uplink control channel resource transmitting a second scheduling request, and a priority of a service corresponding to the first scheduling request is not lower than a priority of a service corresponding to the second scheduling request, the first scheduling request and the second scheduling request being pending scheduling requests;
that an uplink control channel resource transmitting the first scheduling request overlaps with an uplink control channel resource transmitting a third scheduling request, and a priority of a logical channel and/or logical channel group for the first scheduling request is higher than a priority of a logical channel and/or logical channel group for the third scheduling request, the first scheduling request being a pending scheduling request, and the third scheduling request being a scheduling request which the physical layer has been indicated to transmit;
that an uplink control channel resource transmitting the first scheduling request overlaps with an uplink control channel resource transmitting a third scheduling request, and a priority of a service for the first scheduling request is higher than a priority of a service for the third scheduling request, the first scheduling request being a pending scheduling request, and the third scheduling request being a scheduling request which the physical layer has been indicated to transmit;
that an uplink control channel resource transmitting the first scheduling request overlaps with an uplink control channel resource transmitting a third scheduling request, and a service type corresponding to the first scheduling request is a high reliability and low latency service, the first scheduling request being a pending scheduling request, and the third scheduling request being a scheduling request which the physical layer has been indicated to transmit;
that an uplink control channel resource transmitting the first scheduling request overlaps with an uplink control channel resource transmitting a third scheduling request, and a priority of a logical channel and/or logical channel group for the first scheduling request is not lower than a priority of a logical channel and/or logical channel group for the third scheduling request, the first scheduling request being a pending scheduling request, and the third scheduling request being a scheduling request which the physical layer has been indicated to transmit;
that an uplink control channel resource transmitting the first scheduling request overlaps with an uplink control channel resource transmitting a third scheduling request, and a priority of a service corresponding to the first scheduling request is not lower than a priority of a service corresponding to the third scheduling request, the first scheduling request being a pending scheduling request, and the third scheduling request being a scheduling request which the physical layer has been indicated to transmit;
that the first scheduling request is a first pending scheduling request after a previous pending scheduling request is cancelled;
that the first scheduling request is a first pending scheduling request triggered after a MAC PDU is packed last time;
that the first scheduling request is a scheduling request which is not indicated to be transmitted by the physical layer after a previous pending scheduling request is cancelled;
that the first scheduling request is a first pending scheduling request after a previous pending scheduling request is cancelled, and a service and/or a logical channel and/or a logical channel group triggering the scheduling request correspond to a first service;
that the first scheduling request is a first pending scheduling request triggered after a MAC PDU is packed last time, and a service and/or a logical channel and/or a logical channel group triggering the scheduling request correspond to a first service; and
that the first scheduling request is a scheduling request which is not indicated to be transmitted by the physical layer after a previous pending scheduling request is cancelled, and a service and/or a logical channel and/or a logical channel group triggering the scheduling request correspond to a first service.

In another embodiment, the first condition includes at least one of:
that an uplink control channel resource transmitting the first scheduling request overlaps with an uplink control channel resource transmitting a second scheduling request, and a priority of a logical channel and/or logical channel group for the first scheduling request is higher than a priority of a logical channel and/or logical channel group for the second scheduling request, the first scheduling request and the second scheduling request being pending scheduling requests;
that an uplink control channel resource transmitting the first scheduling request overlaps with an uplink control channel resource transmitting a second scheduling request, and a priority of a service corresponding to the first scheduling request is higher than a priority of a service corresponding to the second scheduling request, the first scheduling request and the second scheduling request being pending scheduling requests;
that an uplink control channel resource transmitting the first scheduling request overlaps with an uplink control channel resource transmitting a second scheduling request, and a service type corresponding to the first scheduling request is a high reliability and low latency service, the first scheduling request and the second scheduling request being pending scheduling requests;
that an uplink control channel resource transmitting the first scheduling request overlaps with an uplink control channel resource transmitting a second scheduling request, and a priority of a logical channel and/or logical channel group for the first scheduling request is not lower than a priority of a logical channel and/or logical channel group for the second scheduling request, the first scheduling request and the second scheduling request being pending scheduling requests;
that an uplink control channel resource transmitting the first scheduling request overlaps with an uplink control channel resource transmitting a second scheduling request, and a priority of a service corresponding to the first scheduling request is not lower than a priority of a service corresponding to the second scheduling request, the first scheduling request and the second scheduling request being pending scheduling requests;
that an uplink control channel resource transmitting the first scheduling request overlaps with an uplink control channel resource transmitting a third scheduling request, and a priority of a logical channel and/or logical channel group for the first scheduling request is higher than a priority of a logical channel and/or logical channel group for the third scheduling request, the first scheduling request being a pending scheduling request, and the third scheduling request being a scheduling request which the physical layer has been indicated to transmit;
that an uplink control channel resource transmitting the first scheduling request overlaps with an uplink control channel resource transmitting a third scheduling request, and a priority of a service for the first scheduling request is higher than a priority of a service for the third scheduling request, the first scheduling request being a pending scheduling request, and the third scheduling request being a scheduling request which the physical layer has been indicated to transmit;
that an uplink control channel resource transmitting the first scheduling request overlaps with an uplink control channel resource transmitting a third scheduling request, and a service type corresponding to the first scheduling request is a high reliability and low latency service, the first scheduling request being a pending scheduling request, and the third scheduling request being a scheduling request which the physical layer has been indicated to transmit;
that an uplink control channel resource transmitting the first scheduling request overlaps with an uplink control channel resource transmitting a third scheduling request, and a priority of a logical channel and/or logical channel group for the first scheduling request is not lower than a priority of a logical channel and/or logical channel group for the third scheduling request, the first scheduling request being a pending scheduling request, and the third scheduling request being a scheduling request which the physical layer has been indicated to transmit;
that an uplink control channel resource transmitting the first scheduling request overlaps with an uplink control channel resource transmitting a third scheduling request, and a priority of a service corresponding to the first scheduling request is not lower than a priority of a service corresponding to the third scheduling request, the first scheduling request being a pending scheduling request, and the third scheduling request being a scheduling request which the physical layer has been indicated to transmit;
that the first scheduling request is a first pending scheduling request after a previous pending scheduling request is cancelled;
that the first scheduling request is a first pending scheduling request triggered after a MAC PDU is packed last time;
that the first scheduling request is a scheduling request which the physical layer is not indicated to transmit after a previous pending scheduling request is cancelled;
that the first scheduling request is a first pending scheduling request after a previous pending scheduling request is cancelled, and a service and/or a logical channel and/or a logical channel group triggering the scheduling request correspond to a first service;
that the first scheduling request is a first pending scheduling request triggered after a latest MAC PDU is packed, and a service and/or a logical channel and/or a logical channel group triggering the scheduling request correspond to a first service;
that the first scheduling request is a scheduling request which the physical layer is not indicated to transmit after a previous pending scheduling request is cancelled, and a service and/or a logical channel and/or a logical channel group triggering the scheduling request correspond to a first service;
that the first scheduling request is a scheduling request triggered after a MAC PDU is packed;
that the first scheduling request is a scheduling request triggered after a MAC PDU is transmitted to the physical layer;
that the first scheduling request is a scheduling request triggered after a MAC PDU is transmitted;
that an uplink control channel resource transmitting the first scheduling request overlaps or partially overlaps with a first uplink data channel resource, and a length of the first uplink data channel resource is greater than or equal to a first threshold value;
that LCP mapping restriction configured for a logical channel triggering the first scheduling request is not met;
that a first uplink data channel resource does not match LCP mapping restriction configured for a logical channel triggering the first scheduling request;
that an attribute of a first uplink data channel resource does not match LCP mapping restriction configured for a logical channel triggering the first scheduling request;
that a first uplink data channel resource does not meet LCP mapping restriction configured for a logical channel triggering the first scheduling request;
that an attribute of a first uplink data channel resource does not meet LCP mapping restriction configured for a logical channel triggering the first scheduling request;
that a length of a first uplink data channel resource is greater than or equal to a second threshold value;
that an uplink control channel resource of the first scheduling request/the first scheduling request cannot be transmitted at the same time as the first uplink data channel resource;
that an uplink control channel resource of the first scheduling request/the first scheduling request cannot be multiplexed or piggybacked to a first uplink data channel resource;
that a service triggering the first scheduling request is a first service;
that a logical channel triggering the first scheduling request corresponds to a first service;
that a logical channel triggering the first scheduling request is a target logical channel;
that a priority of a logical channel triggering the first scheduling request is higher than a priority of a logical channel and/or a MAC CE carried by a PUSCH;
that a logical channel triggering the first scheduling request is a logical channel corresponding to a first service, and a priority of a logical channel for the first service is higher than a priority of a logical channel and/or a MAC CE carried by a PUSCH; and
that a logical channel triggering the first scheduling request is a logical channel corresponding to a first service, and a priority of a logical channel for the first service is higher than a priority of a logical channel carried by a PUSCH and/or a logical channel corresponding to a MAC CE.

The first service in the above scheme may be a high reliability and/or low latency service, an industrial Internet of Things service, a service obtaining a high QoS requirement, etc.

In an embodiment of the present application, the indicating unit 301 is configured to, in a case where an uplink control channel resource transmitting the first scheduling request overlaps or partially overlaps with a first uplink data channel resource, if a logical channel corresponding to a first service triggers the first scheduling request, and a priority of the first service is higher than a priority of a service transmitted on a first uplink data channel or a priority of the first service is higher than a priority of a service corresponding to a BSR MAC CE carried by the first uplink data channel, and/or
in a case where an uplink control channel resource transmitting the first scheduling request overlaps or partially overlaps with a first uplink data channel resource, if a logical channel corresponding to a first service triggers the first scheduling request, and a priority of the first service is the same as a priority of a service transmitted on a first uplink data channel or a priority of the first service is the same as a priority of a service corresponding to a BSR MAC CE carried by the first uplink data channel,
the MAC layer indicating the physical layer to send the first scheduling request; and/or
the MAC layer indicating the physical layer to send preferentially the first scheduling request or the uplink control channel resource corresponding to the first scheduling request; and/or
the MAC layer indicating a service type corresponding to the first scheduling request to the physical layer; and/or
the MAC layer indicating logical channel information corresponding to the first scheduling request to the physical layer.

In an embodiment of the present application, the indicating unit 301 is configured to, in a case where an uplink control channel resource transmitting the first scheduling request overlaps or partially overlaps with a first uplink data channel resource, if a logical channel corresponding to a first service triggers the first scheduling request, and a priority of the first service is higher than a priority of a service transmitted on a first uplink data channel or a priority of the first service is higher than a priority of a service corresponding to a BSR MAC CE carried by the first uplink data channel, and/or
in a case where an uplink control channel resource transmitting the first scheduling request overlaps or partially overlaps with a first uplink data channel resource, if a logical channel corresponding to a first service triggers the first scheduling request, and a priority of the first service is the same as a priority of a service transmitted on a first uplink data channel or a priority of the first service is the same as a priority of a service corresponding to a BSR MAC CE carried by the first uplink data channel, and/or
the first scheduling request is a scheduling request triggered after a MAC PDU is packed, and/or
the first scheduling request is a scheduling request triggered after a MAC PDU is transmitted to the physical layer, and/or
the first scheduling request is a scheduling request triggered after a MAC PDU is transmitted, and/or
an uplink control channel resource transmitting the first scheduling request overlaps or partially overlaps with a first uplink data channel resource, and a length of the first uplink data channel resource is greater than or equal to a first threshold value, and/or
LCP mapping restriction configured for a logical channel triggering the first scheduling request is not met, and/or
a first uplink data channel resource does not match LCP mapping restriction configured for a logical channel triggering the first scheduling request, and/or
an attribute of a first uplink data channel resource does not match LCP mapping restriction configured for a logical channel triggering the first scheduling request, and/or
a first uplink data channel resource does not meet LCP mapping restriction configured for a logical channel triggering the first scheduling request, and/or
an attribute of a first uplink data channel resource does not meet LCP mapping restriction configured for a logical channel triggering the first scheduling request, and/or
a length of a first uplink data channel resource is greater than or equal to a second threshold value, and/or
an uplink control channel resource of the first scheduling request/the first scheduling request cannot be transmitted at the same time as the first uplink data channel resource, and/or
an uplink control channel resource of the first scheduling request/the first scheduling request cannot be multiplexed or piggybacked to a first uplink data channel resource, and/or
a service triggering the first scheduling request is a first service, and/or
a logical channel triggering the first scheduling request corresponds to a first service, and/or
a logical channel triggering the first scheduling request is a target logical channel, and/or
a priority of a logical channel triggering the first scheduling request is higher than a priority of a logical channel and/or a MAC CE carried by a PUSCH, and/or
a logical channel triggering the first scheduling request is a logical channel corresponding to a first service, and a priority of a logical channel of the first service is higher than a priority of a logical channel and/or a MAC CE carried by a PUSCH, and/or
a logical channel triggering the first scheduling request is a logical channel corresponding to a first service, and a priority of a logical channel of the first service is higher than a priority of a logical channel carried by a PUSCH and/or a logical channel corresponding to a MAC CE,
the MAC layer indicating the physical layer to transmit the first scheduling request; and/or
the MAC layer indicating the physical layer to transmit preferentially the first scheduling request or the uplink control channel resource corresponding to the first scheduling request; and/or
the MAC layer indicating a service type corresponding to the first scheduling request to the physical layer; and/or
the MAC layer indicating logical channel information corresponding to the first scheduling request to the physical layer; and/or
the MAC layer sending third information to the physical layer according to an indication from the physical layer, wherein the third information is information which the MAC layer is indicated by the physical layer to send.

The first service in the above scheme may be a high reliability and/or low latency service, an industrial Internet of Things service, a service obtaining a high QoS requirement, etc.

In an embodiment of the present application, the determining unit 302 is configured to determine whether to transmit the first scheduling request or the first uplink data channel or the PRACH according to at least one of a priority/identifier of the first service, a priority/identifier of a logical channel carrying the first service, a priority/identifier of a logical channel group carrying the first service, an identifier/priority of a logical channel/a service to be transmitted, a priority of a service/a logical channel/data carried on the first uplink data channel, a priority of a MAC CE carried on the first uplink data channel or a priority/identifier of a logical channel/a service/data corresponding to a MAC CE, a priority of a logical channel triggering the first scheduling request, an identifier of a logical channel triggering the first scheduling request, a priority/identifier of a service/data corresponding to a logical channel triggering the first scheduling request, an identifier of a service/a logical channel/data carried on the first uplink data channel, the second information from the network, a priority/identifier of a logical channel/a service/data to be transmitted triggering the PRACH, and the first information.

In an embodiment of the present application, the indicating unit 301 is configured to, in a case where an uplink control channel resource transmitting the first scheduling request overlaps or partially overlaps with a first uplink data channel resource, if a logical channel corresponding to a first service triggers the first scheduling request, and a priority of the first service or a priority of a logical channel corresponding to the first service is higher than a priority of a service/data/a logical channel transmitted on the first uplink data channel, or a priority of the first service or a priority of a logical channel corresponding to the first service is higher than a priority of a MAC CE carried by the first uplink data channel or a priority of a service/data/a logical channel corresponding to a MAC CE, and/or
in a case where an uplink control channel resource transmitting the first scheduling request overlaps or partially overlaps with a first uplink data channel resource, if a logical channel corresponding to a first service triggers the first scheduling request and a priority of the first service or a priority of a logical channel corresponding to the first service is the same as a priority of a service/data/a logical channel transmitted on the first uplink data channel, or a priority of the first service or a priority of a logical channel corresponding to the first service is the same as a priority of a MAC CE carried by the first uplink data channel or a priority of a service/data/a logical channel corresponding to a MAC CE,
the MAC layer indicating the physical layer to transmit the first scheduling request; and/or
the MAC layer indicating to the physical layer that the first scheduling request or the uplink control channel resource corresponding to the first scheduling request is transmitted preferentially; and/or
the MAC layer indicating a service type corresponding to the first scheduling request to the physical layer; and/or
the MAC layer indicating logical channel information corresponding to the first scheduling request to the physical layer; and/or
the MAC layer indicating the first information to the physical layer.

In an embodiment of the present application, the determining unit 302 is configured to determine whether to transmit the first scheduling request or the first uplink data channel or the PRACH according to at least one of a priority/identifier of the first service, a priority/identifier of a logical channel carrying the first service, a priority/identifier of a logical channel group carrying the first service, an identifier/priority of a logical channel/a service to be transmitted, a priority/identifier of a service/a logical channel/data carried on the first uplink data channel, a priority of a MAC CE carried on the first uplink data channel or a priority/identifier of a logical channel/a service/data corresponding to a MAC CE, a priority of a logical channel triggering the first scheduling request, an identifier of a logical channel triggering the first scheduling request, a priority/identifier of a service/data corresponding to a logical channel triggering the first scheduling request, an identifier of a service/a logical channel/data carried on the first uplink data channel, the second information from the network, a priority/identifier of a logical channel/a service/data to be transmitted triggering the PRACH, and the first information.

In an embodiment of the present application, the first service includes at least one of a high reliability and low latency service, an industrial Internet of Things service, a vertical industry service, an Internet of Vehicles service, and a service in a time-sensitive network.

Those skilled in the art should understand that the relevant description of the device for processing the scheduling requests in accordance with the embodiment of the present application may be understood with reference to the relevant description of the method for processing the scheduling requests in accordance with the embodiment of the present application.

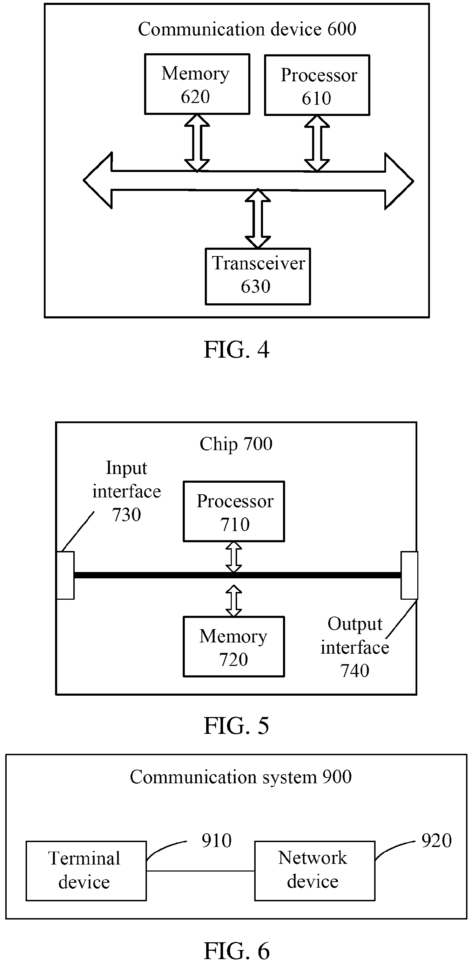

FIG. 4 is a schematic structural diagram of a communication device 600 in accordance with an embodiment of the present application. The communication device may be any type of terminals. The communication device 600 shown in FIG. 4 includes a processor 610, which may call and run a computer program from a memory to implement the method in the embodiment of the present application.

Optionally, as shown in FIG. 4, the communication device 600 may further include a memory 620. The processor 610 may call and run the computer program stored in the memory 620 to implement the method according to the embodiment of the present application.

The memory 620 may be a separate device independent of the processor 610 or may be integrated in the processor 610.

Optionally, as shown in FIG. 4, the communication device 600 may further include a transceiver 630. The processor 610 may control the transceiver 630 to communicate with other devices. Specifically, the transceiver 630 may send information or data to other devices or receive information or data sent by other devices.

The transceiver 630 may include a transmitter and a receiver. The transceiver 630 may further include antennas, the number of which may be one or more.

Optionally, the communication device 600 may be specifically the network device according to the embodiment of the present application, and the communication device 600 may implement the corresponding processes implemented by the network device in various methods in the embodiments of the present application, and will not be described repeatedly herein for brevity.

Optionally, the communication device 600 may be specifically the mobile terminal/terminal according to the embodiment of the present application, and the communication device 600 may implement the corresponding processes implemented by the mobile terminal/terminal in various methods in the embodiments of the present application, and will not be described repeatedly herein for brevity.

FIG. 5 is a schematic structural diagram of a chip in accordance with an embodiment of the present application. The chip 700 shown in FIG. 5 includes a processor 710, which may call and run a computer program from a memory to implement the method in the embodiment of the present application.

Optionally, as shown in FIG. 5, the chip 700 may further include the memory 720. The processor 710 may call and run the computer program from the memory 720 to implement the method in the embodiment of the present application.

The memory 720 may be a separate device independent of the processor 710 or may be integrated in the processor 710.

Optionally, the chip 700 may further include an input interface 730. The processor 710 may control the input interface 730 to communicate with other devices or chips, specifically, may acquire information or data sent by other devices or chips.

Optionally, the chip 700 may further include an output interface 740. The processor 710 may control the output interface 740 to communicate with other devices or chips, specifically, may output information or data to other devices or chips.

Optionally, the chip may be applied to the network device in the embodiments of the present application, and the chip may implement the corresponding processes implemented by the network device in various methods in the embodiments of the present application, and will not be described repeatedly herein for brevity.

Optionally, the chip may be applied to the mobile terminal/terminal in the embodiments of the present application, and the chip may implement the corresponding processes implemented by the mobile terminal/terminal in various methods in the embodiments of the present application, and will not be described repeatedly herein for brevity.

It should be understood that the chip mentioned in the embodiment of the present application may be referred to as a system-level chip, a system chip, a chip system or a system-on-chip, etc.

FIG. 6 is a schematic block diagram of a communication system 900 in accordance with an embodiment of the present application. As shown in FIG. 6, the communication system 900 may include a terminal 910 and a network device 920.

The terminal 910 may be configured to implement the corresponding functions implemented by the terminal in the above-mentioned method, and the network device 920 may be configured to implement the corresponding functions implemented by the network device in the above-mentioned method, and will not be described repeatedly herein for brevity.

It should be understood that the processor in the embodiment of the present application may be an integrated circuit chip having a signal processing capability. In an implementation process, the steps of the foregoing method embodiments may be implemented through an integrated logic circuit of hardware in the processor or instructions in a form of software. The processor described above may be a general purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform various methods, steps and logical block diagrams disclosed in the embodiments of the present application. The general purpose processor may be a microprocessor, or the processor may also be any conventional processor, or the like. The steps of the methods disclosed in the embodiments of the present application may be directly embodied to be implemented by a hardware decoding processor, or may be implemented by a combination of hardware and software modules in the decoding processor. The software modules may be located in a storage medium which is mature in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with its hardware.

It may be understood that the memory in the embodiments of the present application may be a volatile memory or a non-volatile memory, or may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), which is used as an external cache. Through exemplary but not restrictive description, many forms of RAMs may be available, such as a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchronous link dynamic random access memory (SLDRAM), and a direct Rambus dynamic random access memory (DR RAM). It should be noted that the memory in the systems and methods described herein is intended to include, but not be limited to, these and any other suitable types of memories.

It should be understood that the foregoing memory is described in an exemplary but non-limiting sense. For example, the memory in the embodiments of the present application may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), a direct Rambus RAM (DR RAM), or the like. That is, the memory in the embodiments of the present application is intended to include, but not be limited to, these and any other suitable types of memories.

An embodiment of the present application further provides a computer readable storage medium configured to store a computer program.

Optionally, the computer readable storage medium may be applied to the network device in the embodiments of the present application, and the computer program causes the computer to perform the corresponding processes implemented by the network device in various methods in the embodiments of the present application, and will not be described repeatedly for brevity.

Optionally, the computer readable storage medium may be applied to the mobile terminal/terminal in the embodiments of the present application, and the computer program causes the computer to perform the corresponding processes implemented by the mobile terminal/terminal device in various methods in the embodiments of the present application, and will not be described repeatedly for brevity.

An embodiment of the present application also provides a computer program product including computer program instructions.

Optionally, the computer program product may be applied to the network device in the embodiments of the present application, and the computer program instructions cause the computer to perform the corresponding processes implemented by the network device in various methods in the embodiments of the present application, and will not be described repeatedly for brevity.

Optionally, the computer program product may be applied to the mobile terminal/terminal in the embodiments of the present application, and the computer program instructions cause the computer to perform the corresponding processes implemented by the mobile terminal/terminal in various methods in the embodiments of the present application, and will not be described repeatedly for brevity.

An embodiment of the present application further provides a computer program.

Optionally, the computer program may be applied to the network device in the embodiments of the present application. The computer program, when running on a computer, causes the computer to perform the corresponding processes implemented by the network device in various methods of the embodiments of the present application, and will not be described repeatedly for brevity.

Optionally, the computer program may be applied to the mobile terminal/terminal in the embodiments of the present application. The computer program, when running on a computer, causes the computer to perform the corresponding processes implemented by the mobile terminal/terminal in various methods in the embodiments of the present application, and will not be described repeatedly for brevity.

A person of ordinary skill in the art may recognize that the elements and algorithm steps in various examples described in combination with the embodiments disclosed herein can be implemented in electronic hardware, or a combination of computer software and electronic hardware. Whether these functions are implemented in hardware or software depends on the specific application and design constraints of the technical solution. Skilled artisans may use different methods to implement the described functions for each particular application, but such implementation should not be considered to be beyond the scope of the present application.

Those skilled in the art may clearly understand that for the sake of convenience and conciseness of description, the specific working processes of the systems, devices and units described above may be described with reference to the corresponding processes in the above method embodiments and will not be repeated herein.

In several embodiments provided by the present invention, it should be understood that the disclosed systems, devices and methods may be implemented in other ways. For example, the device embodiments described above are only illustrative, for example, the division of the units is only a logical function division, and there may be other division manners in actual implementation. For example, multiple units or components may be combined or integrated into another system, or some features may be ignored or not executed. In addition, the shown or discussed coupling or direct coupling or communication connection between each other may be an indirect coupling or communication connection through some interfaces, devices or units, or may be in electrical, mechanical or other forms.

The unit described as a separate component may or may not be physically separated, and the component shown as a unit may or may not be a physical unit, i.e., it may be located in one place or may be distributed across multiple network units. Part or all of the units may be selected according to actual needs to achieve the purpose of the embodiments.

In addition, various functional units in various embodiments of the present application may be integrated into one processing unit, or may exist physically separately, or two or more than two units may be integrated into one unit.

The function, if implemented in a form of software functional unit and sold or used as an independent product, may be stored in a computer readable storage medium. Based on such understanding, the technical scheme of the present application, in essence, or the part contributing to the prior art, or the part of the technical solution, may be embodied in the form of a software product, which is stored in a storage medium, and includes several instructions for causing a computer device (which may be a personal computer, a server, or a network device, etc.) to perform all or part of the steps of various embodiments of the present application. The aforementioned storage medium includes various media, such as a U disk, a mobile hard disk, a read-only memory (ROM), a random access memory (RAM), a magnetic disk, or an optical disk, which are capable of storing program codes

What are described above are merely example implementations of the present application, but the protection scope of the present application is not limited thereto. Any variation or substitution that may easily occur to a person skilled in the art within the technical scope disclosed by the present application shall be included within the protection scope of the present application. Therefore, the protection scope of the present application shall be subject to the protection scope of the claims.

## Claims

1. A method for processing a scheduling request, applied to a terminal, the method comprising:
indicating, by a media access control (MAC) layer, a physical layer to send a first scheduling request.

2. The method according to claim 1, further comprising:
determining, by the physical layer according to a first rule, at least one of:
a scheduling request needing to be transmitted;
a priority of uplink control information; and
a priority of an uplink control channel.

3. The method according to claim 2, wherein the first rule comprises at least one of:
first information;
preferentially processing a first scheduling request finally indicated by the MAC layer;
preferentially processing a first scheduling request firstly indicated by the MAC layer; and
second information from a network.

4. The method according to any one of claims 1 to 3, further comprising:
the MAC layer indicating the first information to the physical layer.

5. The method according to claim 3 or 4, wherein the first information comprises at least one of following information corresponding to the first scheduling request:
pre-emption indication information;
service type information;
service priority information;
logical channel information;
logical channel priority information;
logical channel group information;
logical channel group priority information; and
first service indication information.

6. The method according to claim 3 or 4, wherein the first information comprises at least one of following information corresponding to the first scheduling request:
pre-emption indication information;
service type information;
service priority information;
logical channel information;
logical channel priority information;
logical channel group information;
logical channel group priority information;
first service indication information;
priority information; and
priority level information.

7. The method according to any one of claims 1 to 6, wherein the MAC layer indicating the physical layer to send the first scheduling request comprises:
in a case that a first condition is met, the MAC layer indicating the physical layer to send the first scheduling request.

8. The method according to claim 7, further comprising:
the MAC layer determining the first condition according to at least one of:
a priority of a logical channel triggering the scheduling request, an identifier of a logical channel triggering the scheduling request, a priority of a service triggering the scheduling request, an identifier of a service triggering the scheduling request, an identifier of a service corresponding to uplink control information (UCI), a priority corresponding to the UCI, a priority corresponding to a configured physical uplink shared channel (PUSCH) grant, a priority of a logical channel to be transmitted, an identifier of a logical channel to be transmitted, an identifier/a priority of a service to be transmitted, an identifier/a priority of a service/data/a media access control control element (MAC CE)/a logical channel carried by the PUSCH, second information from the network, and a priority/an identifier of a logical channel/a service/data to be transmitted triggering a Physical Random Access Channel (PRACH).

9. The method according to claim 7, further comprising:
determining a first resource to be transmitted according to at least one of:
a priority of a logical channel triggering the scheduling request, an identifier of a logical channel triggering the scheduling request, a priority of a service triggering the scheduling request, an identifier of a service triggering the scheduling request, an identifier of a service corresponding to hybrid automatic repeat request (HARQ) feedback, an identifier of a logical channel corresponding to the HARQ feedback, an identifier corresponding to the HARQ feedback, a priority of a service corresponding to the HARQ feedback, a priority of a logical channel corresponding to the HARQ feedback, a priority corresponding to the HARQ feedback, an identifier of a service corresponding to a (channel state information reference signal) CSI-RS, an identifier of a logical channel corresponding to the CSI-RS, an identifier corresponding to the CSI-RS, a priority of a service corresponding to the CSI-RS, a priority of a logical channel corresponding to the CSI-RS, a priority corresponding to the CSI-RS, second information from the network, an identifier of a service corresponding to UCI, a priority corresponding to the UCI, the first information, and a priority/an identifier of a logical channel/a service/data to be transmitted triggering a Physical Random Access Channel (PRACH); wherein the first resource is at least one of the scheduling request (SR), a configured physical uplink shared channel (PUSCH), the CSI-RS, the HARQ feedback, and the PRACH.

10. The method according to claim 7, further comprising:
determining the first resource to be transmitted according to at least one of:
a time point when the scheduling request is triggered, whether a MAC Protocol Data Unit (PDU) is packed, whether a MAC PDU is sent to the physical layer, a grant attribute, a service triggering the scheduling request, a logical channel triggering the scheduling request, a priority of a logical channel triggering the scheduling request, an identifier of the logical channel triggering the scheduling request, a priority of a service triggering the scheduling request, an identifier of the service triggering the scheduling request, an identifier of a service corresponding to HARQ feedback, an identifier of a logical channel corresponding to the HARQ feedback, an identifier corresponding to the HARQ feedback, a priority of a service corresponding to the HARQ feedback, a priority of a logical channel corresponding to the HARQ feedback, a priority corresponding to the HARQ feedback, an identifier of a service corresponding to a CSI-RS, an identifier of a logical channel corresponding to the CSI-RS, an identifier corresponding to the CSI-RS, a priority of a service corresponding to the CSI-RS, a priority of a logical channel corresponding to the CSI-RS, a priority corresponding to the CSI-RS, the second information from the network, an identifier of a service corresponding to UCI, a priority corresponding to UCI, the first information, and a priority/an identifier of a logical channel/a service/data to be transmitted triggering a Physical Random Access Channel (PRACH); wherein the first resource is at least one of the scheduling request (SR), a configured physical uplink shared channel (PUSCH), the CSI-RS, the HARQ feedback and the PRACH.

11. The method according to any one of claims 7 to 10, wherein the first condition comprises at least one of:
that an uplink control channel resource transmitting the first scheduling request overlaps with an uplink control channel resource transmitting a second scheduling request, and a priority of a logical channel and/or logical channel group for the first scheduling request is higher than a priority of a logical channel and/or logical channel group for the second scheduling request, the first scheduling request and the second scheduling request being pending scheduling requests;
that the uplink control channel resource transmitting the first scheduling request overlaps with the uplink control channel resource transmitting the second scheduling request, and a priority of a service corresponding to the first scheduling request is higher than a priority of a service corresponding to the second scheduling request, the first scheduling request and the second scheduling request being pending scheduling requests;
that the uplink control channel resource transmitting the first scheduling request overlaps with the uplink control channel resource transmitting the second scheduling request, and a service type corresponding to the first scheduling request is a high reliability and low latency service, the first scheduling request and the second scheduling request being pending scheduling requests;
that the uplink control channel resource transmitting the first scheduling request overlaps with the uplink control channel resource transmitting the second scheduling request, and a priority of a logical channel and/or logical channel group for the first scheduling request is not lower than a priority of a logical channel and/or logical channel group for the second scheduling request, the first scheduling request and the second scheduling request being pending scheduling requests;
that the uplink control channel resource transmitting the first scheduling request overlaps with the uplink control channel resource transmitting the second scheduling request, and a priority of a service corresponding to the first scheduling request is not lower than a priority of a service corresponding to the second scheduling request, the first scheduling request and the second scheduling request being pending scheduling requests;
that the uplink control channel resource transmitting the first scheduling request overlaps with an uplink control channel resource transmitting a third scheduling request, and a priority of a logical channel and/or logical channel group for the first scheduling request is higher than a priority of a logical channel and/or logical channel group for the third scheduling request, the first scheduling request being a pending scheduling request, and the third scheduling request being a scheduling request which the physical layer has been indicated to transmit;
that the uplink control channel resource transmitting the first scheduling request overlaps with the uplink control channel resource transmitting the third scheduling request, and a priority of a service for the first scheduling request is higher than a priority of a service for the third scheduling request, the first scheduling request being a pending scheduling request, and the third scheduling request being a scheduling request which the physical layer has been indicated to transmit;
that the uplink control channel resource transmitting the first scheduling request overlaps with the uplink control channel resource transmitting the third scheduling request, and a service type corresponding to the first scheduling request is a high reliability and low latency service, the first scheduling request being a pending scheduling request, and the third scheduling request being a scheduling request which the physical layer has been indicated to transmit;
that the uplink control channel resource transmitting the first scheduling request overlaps with the uplink control channel resource transmitting the third scheduling request, and a priority of a logical channel and/or logical channel group for the first scheduling request is not lower than a priority of a logical channel and/or logical channel group for the third scheduling request, the first scheduling request being a pending scheduling request, and the third scheduling request being a scheduling request which the physical layer has been indicated to transmit;
that the uplink control channel resource transmitting the first scheduling request overlaps with the uplink control channel resource transmitting the third scheduling request, and a priority of a service corresponding to the first scheduling request is not lower than a priority of a service corresponding to the third scheduling request, the first scheduling request being a pending scheduling request, and the third scheduling request being a scheduling request which the physical layer has been indicated to transmit;
that the first scheduling request is a first pending scheduling request after a previous pending scheduling request is cancelled;
that the first scheduling request is a first pending scheduling request triggered after a latest MAC protocol data unit (PDU) is packed
that the first scheduling request is a scheduling request which the physical layer is not indicated to transmit after a previous pending scheduling request is cancelled;
that the first scheduling request is a first pending scheduling request after a previous pending scheduling request is cancelled, and a service and/or a logical channel and/or a logical channel group triggering the scheduling request correspond to a first service;
that the first scheduling request is a first pending scheduling request triggered after a latest MAC PDU is packed, and a service and/or a logical channel and/or a logical channel group triggering the scheduling request correspond to the first service; and
that the first scheduling request is a scheduling request which the physical layer is not indicated to transmit after a previous pending scheduling request is cancelled, and a service and/or a logical channel and/or a logical channel group triggering the scheduling request correspond to the first service.

12. The method according to any one of claims 7 to 10, wherein the first condition comprises at least one of:
that an uplink control channel resource transmitting the first scheduling request overlaps with an uplink control channel resource transmitting a second scheduling request, and a priority of a logical channel and/or logical channel group for the first scheduling request is higher than a priority of a logical channel and/or logical channel group for the second scheduling request, the first scheduling request and the second scheduling request being pending scheduling requests;
that the uplink control channel resource transmitting the first scheduling request overlaps with the uplink control channel resource transmitting the second scheduling request, and a priority of a service corresponding to the first scheduling request is higher than a priority of a service corresponding to the second scheduling request, the first scheduling request and the second scheduling request being pending scheduling requests;
that the uplink control channel resource transmitting the first scheduling request overlaps with the uplink control channel resource transmitting the second scheduling request, and a service type corresponding to the first scheduling request is a high reliability and low latency service, the first scheduling request and the second scheduling request being pending scheduling requests;
that the uplink control channel resource transmitting the first scheduling request overlaps with the uplink control channel resource transmitting the second scheduling request, and a priority of a logical channel and/or logical channel group for the first scheduling request is not lower than a priority of a logical channel and/or logical channel group for the second scheduling request, the first scheduling request and the second scheduling request being pending scheduling requests;
that the uplink control channel resource transmitting the first scheduling request overlaps with the uplink control channel resource transmitting the second scheduling request, and a priority of a service corresponding to the first scheduling request is not lower than a priority of a service corresponding to the second scheduling request, the first scheduling request and the second scheduling request being pending scheduling requests;
that the uplink control channel resource transmitting the first scheduling request overlaps with an uplink control channel resource transmitting a third scheduling request, and a priority of a logical channel and/or logical channel group for the first scheduling request is higher than a priority of a logical channel and/or logical channel group for the third scheduling request, the first scheduling request being a pending scheduling request, and the third scheduling request being a scheduling request which the physical layer has been indicated to transmit;
that the uplink control channel resource transmitting the first scheduling request overlaps with the uplink control channel resource transmitting the third scheduling request, and a priority of a service for the first scheduling request is higher than a priority of a service for the third scheduling request, the first scheduling request being a pending scheduling request, and the third scheduling request being a scheduling request which the physical layer has been indicated to transmit;
that the uplink control channel resource transmitting the first scheduling request overlaps with the uplink control channel resource transmitting the third scheduling request, and a service type corresponding to the first scheduling request is a high reliability and low latency service, the first scheduling request being a pending scheduling request, and the third scheduling request being a scheduling request which the physical layer has been indicated to transmit;
that the uplink control channel resource transmitting the first scheduling request overlaps with the uplink control channel resource transmitting the third scheduling request, and a priority of a logical channel and/or logical channel group for the first scheduling request is not lower than a priority of a logical channel and/or logical channel group for the third scheduling request, the first scheduling request being a pending scheduling request, and the third scheduling request being a scheduling request which the physical layer has been indicated to transmit;
that the uplink control channel resource transmitting the first scheduling request overlaps with the uplink control channel resource transmitting the third scheduling request, and a priority of a service corresponding to the first scheduling request is not lower than a priority of a service corresponding to the third scheduling request, the first scheduling request being a pending scheduling request, and the third scheduling request being a scheduling request which the physical layer has been indicated to transmit;
that the first scheduling request is a first pending scheduling request after a previous pending scheduling request is cancelled;
that the first scheduling request is a first pending scheduling request triggered after a latest MAC PDU is packed;
that the first scheduling request is a scheduling request which the physical layer is not indicated to transmit after a previous pending scheduling request is cancelled;
that the first scheduling request is a first pending scheduling request after a previous pending scheduling request is cancelled, and a service and/or a logical channel and/or a logical channel group triggering the scheduling request correspond to a first service;
that the first scheduling request is a first pending scheduling request triggered after a latest MAC PDU is packed, and a service and/or a logical channel and/or a logical channel group triggering the scheduling request correspond to the first service;
that the first scheduling request is a scheduling request which the physical layer is not indicated to transmit after a previous pending scheduling request is cancelled, and a service and/or a logical channel and/or a logical channel group triggering the scheduling request correspond to the first service;
that the first scheduling request is a scheduling request triggered after a MAC PDU is packed;
that the first scheduling request is a scheduling request triggered after a MAC PDU is transmitted to the physical layer;
that the first scheduling request is a scheduling request triggered after a MAC PDU is transmitted;
that the uplink control channel resource transmitting the first scheduling request overlaps or partially overlaps with a first uplink data channel resource, and a length of the first uplink data channel resource is greater than or equal to a first threshold value;
that LCP mapping restriction configured for a logical channel triggering the first scheduling request is not met;
that the first uplink data channel resource does not match the LCP mapping restriction configured for a logical channel triggering the first scheduling request;
that an attribute of the first uplink data channel resource does not match the LCP mapping restriction configured for a logical channel triggering the first scheduling request;
that the first uplink data channel resource does not meet the LCP mapping restriction configured for a logical channel triggering the first scheduling request;
that an attribute of the first uplink data channel resource does not meet the LCP mapping restriction configured for a logical channel triggering the first scheduling request;
that a length of the first uplink data channel resource is greater than or equal to a second threshold value;
that the uplink control channel resource of the first scheduling request/the first scheduling request cannot be transmitted at the same time as the first uplink data channel resource;
that the uplink control channel resource of the first scheduling request/the first scheduling request cannot be multiplexed or piggybacked to the first uplink data channel resource;
that a service triggering the first scheduling request is the first service;
that a logical channel triggering the first scheduling request corresponds to the first service;
that a logical channel triggering the first scheduling request is a target logical channel;
that a priority of a logical channel triggering the first scheduling request is higher than a priority of a logical channel and/or a MAC CE carried by the PUSCH; and
that a logical channel triggering the first scheduling request is a logical channel corresponding to the first service, and a priority of a logical channel for the first service is higher than a priority of a logical channel and/or a MAC CE carried by the PUSCH.

13. The method according to any one of claims 1 to 6, wherein indicating, by a media access control (MAC) layer, a physical layer to send a first scheduling request comprises:
in a case where an uplink control channel resource transmitting the first scheduling request overlaps or partially overlaps with a first uplink data channel resource, when a logical channel corresponding to a first service triggers the first scheduling request, and a priority of the first service is higher than a priority of a service transmitted on a first uplink data channel or a priority of the first service is higher than a priority of a service corresponding to a buffer status report media access control control element (BSR MAC CE) carried by the first uplink data channel, and/or
in a case where the uplink control channel resource transmitting the first scheduling request overlaps or partially overlaps with the first uplink data channel resource, when a logical channel corresponding to the first service triggers the first scheduling request, and a priority of the first service is the same as a priority of a service transmitted on a first uplink data channel or a priority of the first service is the same as a priority of a service corresponding to the BSR MAC CE carried by the first uplink data channel, then
the MAC layer indicating the physical layer to send the first scheduling request; and/or
the MAC layer indicating the physical layer to send preferentially the first scheduling request or the uplink control channel resource corresponding to the first scheduling request; and/or
the MAC layer indicating a service type corresponding to the first scheduling request to the physical layer; and/or
the MAC layer indicating logical channel information corresponding to the first scheduling request to the physical layer.

14. The method according to any one of claims 1 to 6, wherein indicating, by a media access control (MAC) layer, a physical layer to send a first scheduling request comprises:
in a case where an uplink control channel resource transmitting the first scheduling request overlaps or partially overlaps with a first uplink data channel resource, when a logical channel corresponding to a first service triggers the first scheduling request, and a priority of the first service is higher than a priority of a service transmitted on a first uplink data channel or a priority of the first service is higher than a priority of a service corresponding to a BSR MAC CE carried by the first uplink data channel, and/or
in a case where the uplink control channel resource transmitting the first scheduling request overlaps or partially overlaps with the first uplink data channel resource, when a logical channel corresponding to the first service triggers the first scheduling request, and a priority of the first service is the same as a priority of a service transmitted on the first uplink data channel or a priority of the first service is the same as a priority of a service corresponding to the BSR MAC CE carried by the first uplink data channel, and/or
the first scheduling request is a scheduling request triggered after a MAC PDU is packed, and/or
the first scheduling request is a scheduling request triggered after the MAC PDU is transmitted to the physical layer, and/or
the first scheduling request is a scheduling request triggered after the MAC PDU is transmitted, and/or
the uplink control channel resource transmitting the first scheduling request overlaps or partially overlaps with the first uplink data channel resource, and a length of the first uplink data channel resource is greater than or equal to a first threshold value, and/or
LCP mapping restriction configured for a logical channel triggering the first scheduling request is not met, and/or
the first uplink data channel resource does not match the LCP mapping restriction configured for a logical channel triggering the first scheduling request, and/or
an attribute of the first uplink data channel resource does not match the LCP mapping restriction configured for a logical channel triggering the first scheduling request, and/or
the first uplink data channel resource does not meet the LCP mapping restriction configured for a logical channel triggering the first scheduling request, and/or
an attribute of the first uplink data channel resource does not meet the LCP mapping restriction configured for a logical channel triggering the first scheduling request, and/or
a length of the first uplink data channel resource is greater than or equal to a second threshold value, and/or
the uplink control channel resource of the first scheduling request/the first scheduling request cannot be transmitted at the same time as the first uplink data channel resource, and/or
the uplink control channel resource of the first scheduling request/the first scheduling request cannot be multiplexed or piggybacked to the first uplink data channel resource, and/or
a service triggering the first scheduling request is a first service, and/or
a logical channel triggering the first scheduling request corresponds to a first service,
and/or
a logical channel triggering the first scheduling request is a target logical channel, and/or
a priority of a logical channel triggering the first scheduling request is higher than a priority of a logical channel and/or the MAC CE carried by a PUSCH, and/or
a logical channel triggering the first scheduling request is a logical channel corresponding to the first service, and a priority of a logical channel of the first service is higher than a priority of a logical channel and/or a MAC CE carried by the PUSCH, then
the MAC layer indicating the physical layer to transmit the first scheduling request; and/or
the MAC layer indicating the physical layer to transmit preferentially the first scheduling request or the uplink control channel resource corresponding to the first scheduling request; and/or
the MAC layer indicating a service type corresponding to the first scheduling request to the physical layer; and/or
the MAC layer indicating logical channel information corresponding to the first scheduling request to the physical layer; and/or
the MAC layer sending third information to the physical layer according to an indication from the physical layer, wherein the third information is information which the MAC layer is indicated by the physical layer to send.

15. The method according to claim 14, further comprising:
determining whether to send the first scheduling request or the first uplink data channel or the PRACH according to at least one of:
a priority/identifier of the first service, a priority/identifier of a logical channel carrying the first service, a priority/identifier of a logical channel group carrying the first service, an identifier/priority of a logical channel/a service to be transmitted, a priority of a service/a logical channel/data carried on the first uplink data channel, a priority of a MAC CE carried on the first uplink data channel or a priority/identifier of a logical channel/a service/data corresponding to a MAC CE, a priority of a logical channel triggering the first scheduling request, an identifier of a logical channel triggering the first scheduling request, a priority/identifier of a service/data corresponding to a logical channel triggering the first scheduling request, an identifier of a service/a logical channel/data carried on the first uplink data channel, the second information from the network, a priority/identifier of a logical channel/a service/data to be transmitted triggering the PRACH, and the first information.

16. The method according to any one of claims 1 to 6, wherein indicating, by a media access control (MAC) layer, a physical layer to send a first scheduling request comprises:
in a case where an uplink control channel resource transmitting the first scheduling request overlaps or partially overlaps with a first uplink data channel resource, when a logical channel corresponding to a first service triggers the first scheduling request, and a priority of the first service or a priority of a logical channel corresponding to the first service is higher than a priority of a service/datala logical channel transmitted on the first uplink data channel, or a priority of the first service or a priority of a logical channel corresponding to the first service is higher than a priority of a MAC CE carried by the first uplink data channel or a priority of a service/datala logical channel corresponding to a MAC CE, and/or
in a case where the uplink control channel resource transmitting the first scheduling request overlaps or partially overlaps with the first uplink data channel resource, when a logical channel corresponding to the first service triggers the first scheduling request and a priority of the first service or a priority of a logical channel corresponding to the first service is the same as a priority of a service/data/a logical channel transmitted on the first uplink data channel, or a priority of the first service or a priority of a logical channel corresponding to the first service is the same as a priority of a MAC CE carried by the first uplink data channel or a priority of a service/data/a logical channel corresponding to the MAC CE, then
the MAC layer indicating the physical layer to transmit the first scheduling request; and/or
the MAC layer indicating to the physical layer that the first scheduling request or the uplink control channel resource corresponding to the first scheduling request is transmitted preferentially; and/or
the MAC layer indicating a service type corresponding to the first scheduling request to the physical layer; and/or
the MAC layer indicating logical channel information corresponding to the first scheduling request to the physical layer; and/or
the MAC layer indicating the first information to the physical layer.

17. The method according to claim 16, further comprising:
determining whether to transmit the first scheduling request or the first uplink data channel or the PRACH according to at least one of:
a priority/identifier of the first service, a priority/identifier of a logical channel carrying the first service, a priority/identifier of a logical channel group carrying the first service, an identifier/priority of a logical channel/a service to be transmitted, a priority/identifier of a service/a logical channel/data carried on the first uplink data channel, a priority of a MAC CE carried on the first uplink data channel or a priority/identifier of a logical channel/a service/data corresponding to a MAC CE, a priority of a logical channel triggering the first scheduling request, an identifier of a logical channel triggering the first scheduling request, a priority/identifier of a service/data corresponding to a logical channel triggering the first scheduling request, an identifier of a service/a logical channel/data carried on the first uplink data channel, the second information from the network, a priority/identifier of a logical channel/a service/data to be transmitted triggering the PRACH, and the first information.

18. The method according to any one of claims 13 to 17, wherein the first service comprises at least one of a high reliability and low latency service, an industrial Internet of Things service, a vertical industry service, an Internet of Vehicles service, and a service in a time-sensitive network.

19. A device for processing a scheduling request, comprising:
an indicating unit, configured to indicate, through a media access control (MAC) layer, a physical layer to send a first scheduling request.

20. The device according to claim 19, further comprising:
a determining unit, configured to determine, through the physical layer according to a first rule, at least one of:
a scheduling request needing to be transmitted;
a priority of uplink control information; and
a priority of an uplink control channel.

21. The device according to claim 20, wherein the first rule comprises at least one of:
first information;
preferentially processing a first scheduling request finally indicated by the MAC layer;
preferentially processing a first scheduling request firstly indicated by the MAC layer; and
second information from a network.

22. The device according to any one of claims 19 to 21, wherein the indicating unit is further configured to indicate the first information to the physical layer through the MAC layer.

23. The device according to claim 21 or 22, wherein the first information comprises at least one of following information corresponding to the first scheduling request:
pre-emption indication information;
service type information;
service priority information;
logical channel information;
logical channel priority information;
logical channel group information;
logical channel group priority information; and
first service indication information.

24. The device according to claim 21 or 22, wherein the first information comprises at least one of following information corresponding to the first scheduling request:
pre-emption indication information;
service type information;
service priority information;
logical channel information;
logical channel priority information;
logical channel group information;
logical channel group priority information;
first service indication information;
priority information; and
priority level information.

25. The device according to any one of claims 19 to 24, wherein the indicating unit is configured to indicate, by the MAC layer, the physical layer to send the first scheduling request in a case that a first condition is met.

26. The device according to claim 25, further comprising:
a determining unit, configured to determine the first condition according to at least one of:
a priority of a logical channel triggering the scheduling request, an identifier of a logical channel triggering the scheduling request, a priority of a service triggering the scheduling request, an identifier of a service triggering the scheduling request, an identifier of a service corresponding to uplink control information (UCI), a priority corresponding to the UCI, a priority corresponding to a configured physical uplink shared channel (PUSCH) grant, a priority of a logical channel to be transmitted, an identifier of a logical channel to be transmitted, an identifier/a priority of a service to be transmitted, an identifier/a priority of a service/data / a media access control control element (MAC CE)/a logical channel carried by the PUSCH, second information from the network, and a priority/an identifier of a logical channel/a service/data to be transmitted triggering a Physical Random Access Channel (PRACH).

27. The device according to claim 25, further comprising:
a determining unit, configured to determine a first resource to be transmitted according to at least one of:
a priority of a logical channel triggering the scheduling request, an identifier of a logical channel triggering the scheduling request, a priority of a service triggering the scheduling request, an identifier of a service triggering the scheduling request, an identifier of a service corresponding to hybrid automatic repeat request (HARQ)feedback, an identifier of a logical channel corresponding to the HARQ feedback, an identifier corresponding to the HARQ feedback, a priority of a service corresponding to the HARQ feedback, a priority of a logical channel corresponding to the HARQ feedback, a priority corresponding to the HARQ feedback, an identifier of a service corresponding to a (channel state information reference signal) CSI-RS, an identifier of a logical channel corresponding to the CSI-RS, an identifier corresponding to the CSI-RS, a priority of a service corresponding to the CSI-RS, a priority of a logical channel corresponding to the CSI-RS, a priority corresponding to the CSI-RS, second information from the network, an identifier of a service corresponding to UCI, a priority corresponding to the UCI, the first information, and a priority/an identifier of a logical channel/a service/data to be transmitted triggering a Physical Random Access Channel (PRACH); wherein the first resource is at least one of the scheduling request (SR), a configured physical uplink shared channel (PUSCH), the CSI-RS, the HARQ feedback, and the PRACH.

28. The device according to claim 25, further comprising:
a determining unit, configured to determine the first resource to be transmitted according to at least one of:
a time point when the scheduling request is triggered, whether a MAC Protocol Data Unit (PDU)is packed, whether a MAC PDU is sent to the physical layer, a grant attribute, a service triggering the scheduling request, a logical channel triggering the scheduling request, a priority of a logical channel triggering the scheduling request, an identifier of the logical channel triggering the scheduling request, a priority of a service triggering the scheduling request, an identifier of the service triggering the scheduling request, an identifier of a service corresponding to HARQ feedback, an identifier of a logical channel corresponding to the HARQ feedback, an identifier corresponding to the HARQ feedback, a priority of a service corresponding to the HARQ feedback, a priority of a logical channel corresponding to the HARQ feedback, a priority corresponding to the HARQ feedback, an identifier of a service corresponding to a CSI-RS, an identifier of a logical channel corresponding to the CSI-RS, an identifier corresponding to the CSI-RS, a priority of a service corresponding to the CSI-RS, a priority of a logical channel corresponding to the CSI-RS, a priority corresponding to the CSI-RS, the second information from the network, an identifier of a service corresponding to UCI, a priority corresponding to UCI, the first information, and a priority/an identifier of a logical channel/a service/data to be transmitted triggering a Physical Random Access Channel (PRACH); wherein the first resource is at least one of the scheduling request (SR), a configured physical uplink shared channel (PUSCH), the CSI-RS, the HARQ feedback and the PRACH.

29. The device according to any one of claims 25 to 28, wherein the first condition comprises at least one of:
that an uplink control channel resource transmitting the first scheduling request overlaps with an uplink control channel resource transmitting a second scheduling request, and a priority of a logical channel and/or logical channel group for the first scheduling request is higher than a priority of a logical channel and/or logical channel group for the second scheduling request, the first scheduling request and the second scheduling request being pending scheduling requests;
that the uplink control channel resource transmitting the first scheduling request overlaps with the uplink control channel resource transmitting the second scheduling request, and a priority of a service corresponding to the first scheduling request is higher than a priority of a service corresponding to the second scheduling request, the first scheduling request and the second scheduling request being pending scheduling requests;
that the uplink control channel resource transmitting the first scheduling request overlaps with the uplink control channel resource transmitting the second scheduling request, and a service type corresponding to the first scheduling request is a high reliability and low latency service, the first scheduling request and the second scheduling request being pending scheduling requests;
that the uplink control channel resource transmitting the first scheduling request overlaps with the uplink control channel resource transmitting the second scheduling request, and a priority of a logical channel and/or logical channel group for the first scheduling request is not lower than a priority of a logical channel and/or logical channel group for the second scheduling request, the first scheduling request and the second scheduling request being pending scheduling requests;
that the uplink control channel resource transmitting the first scheduling request overlaps with the uplink control channel resource transmitting the second scheduling request, and a priority of a service corresponding to the first scheduling request is not lower than a priority of a service corresponding to the second scheduling request, the first scheduling request and the second scheduling request being pending scheduling requests;
that the uplink control channel resource transmitting the first scheduling request overlaps with an uplink control channel resource transmitting a third scheduling request, and a priority of a logical channel and/or logical channel group for the first scheduling request is higher than a priority of a logical channel and/or logical channel group for the third scheduling request, the first scheduling request being a pending scheduling request, and the third scheduling request being a scheduling request which the physical layer has been indicated to transmit;
that the uplink control channel resource transmitting the first scheduling request overlaps with the uplink control channel resource transmitting the third scheduling request, and a priority of a service for the first scheduling request is higher than a priority of a service for the third scheduling request, the first scheduling request being a pending scheduling request, and the third scheduling request being a scheduling request which the physical layer has been indicated to transmit;
that the uplink control channel resource transmitting the first scheduling request overlaps with the uplink control channel resource transmitting the third scheduling request, and a service type corresponding to the first scheduling request is a high reliability and low latency service, the first scheduling request being a pending scheduling request, and the third scheduling request being a scheduling request which the physical layer has been indicated to transmit;
that the uplink control channel resource transmitting the first scheduling request overlaps with the uplink control channel resource transmitting the third scheduling request, and a priority of a logical channel and/or logical channel group for the first scheduling request is not lower than a priority of a logical channel and/or logical channel group for the third scheduling request, the first scheduling request being a pending scheduling request, and the third scheduling request being a scheduling request which the physical layer has been indicated to transmit;
that the uplink control channel resource transmitting the first scheduling request overlaps with the uplink control channel resource transmitting the third scheduling request, and a priority of a service corresponding to the first scheduling request is not lower than a priority of a service corresponding to the third scheduling request, the first scheduling request being a pending scheduling request, and the third scheduling request being a scheduling request which the physical layer has been indicated to transmit;
that the first scheduling request is a first pending scheduling request after a previous pending scheduling request is cancelled;
that the first scheduling request is a first pending scheduling request triggered after a latest MAC PDU is packed;
that the first scheduling request is a scheduling request which the physical layer is not indicated to transmit after a previous pending scheduling request is cancelled;
that the first scheduling request is a first pending scheduling request after a previous pending scheduling request is cancelled, and a service and/or a logical channel and/or a logical channel group triggering the scheduling request correspond to a first service;
that the first scheduling request is a first pending scheduling request triggered after a latest MAC PDU is packed, and a service and/or a logical channel and/or a logical channel group triggering the scheduling request correspond to the first service; and
that the first scheduling request is a scheduling request which the physical layer is not indicated to transmit after a previous pending scheduling request is cancelled, and a service and/or a logical channel and/or a logical channel group triggering the scheduling request correspond to the first service.

30. The device according to any one of claims 25 to 28, wherein the first condition comprises at least one of:
that an uplink control channel resource transmitting the first scheduling request overlaps with an uplink control channel resource transmitting a second scheduling request, and a priority of a logical channel and/or logical channel group for the first scheduling request is higher than a priority of a logical channel and/or logical channel group for the second scheduling request, the first scheduling request and the second scheduling request being pending scheduling requests;
that the uplink control channel resource transmitting the first scheduling request overlaps with the uplink control channel resource transmitting the second scheduling request, and a priority of a service corresponding to the first scheduling request is higher than a priority of a service corresponding to the second scheduling request, the first scheduling request and the second scheduling request being pending scheduling requests;
that the uplink control channel resource transmitting the first scheduling request overlaps with the uplink control channel resource transmitting the second scheduling request, and a service type corresponding to the first scheduling request is a high reliability and low latency service, the first scheduling request and the second scheduling request being pending scheduling requests;
that the uplink control channel resource transmitting the first scheduling request overlaps with the uplink control channel resource transmitting the second scheduling request, and a priority of a logical channel and/or logical channel group for the first scheduling request is not lower than a priority of a logical channel and/or logical channel group for the second scheduling request, the first scheduling request and the second scheduling request being pending scheduling requests;
that the uplink control channel resource transmitting the first scheduling request overlaps with the uplink control channel resource transmitting the second scheduling request, and a priority of a service corresponding to the first scheduling request is not lower than a priority of a service corresponding to the second scheduling request, the first scheduling request and the second scheduling request being pending scheduling requests;
that the uplink control channel resource transmitting the first scheduling request overlaps with an uplink control channel resource transmitting a third scheduling request, and a priority of a logical channel and/or logical channel group for the first scheduling request is higher than a priority of a logical channel and/or logical channel group for the third scheduling request, the first scheduling request being a pending scheduling request, and the third scheduling request being a scheduling request which the physical layer has been indicated to transmit;
that the uplink control channel resource transmitting the first scheduling request overlaps with the uplink control channel resource transmitting the third scheduling request, and a priority of a service for the first scheduling request is higher than a priority of a service for the third scheduling request, the first scheduling request being a pending scheduling request, and the third scheduling request being a scheduling request which the physical layer has been indicated to transmit;
that the uplink control channel resource transmitting the first scheduling request overlaps with the uplink control channel resource transmitting the third scheduling request, and a service type corresponding to the first scheduling request is a high reliability and low latency service, the first scheduling request being a pending scheduling request, and the third scheduling request being a scheduling request which the physical layer has been indicated to transmit;
that the uplink control channel resource transmitting the first scheduling request overlaps with the uplink control channel resource transmitting the third scheduling request, and a priority of a logical channel and/or logical channel group for the first scheduling request is not lower than a priority of a logical channel and/or logical channel group for the third scheduling request, the first scheduling request being a pending scheduling request, and the third scheduling request being a scheduling request which the physical layer has been indicated to transmit;
that the uplink control channel resource transmitting the first scheduling request overlaps with the uplink control channel resource transmitting the third scheduling request, and a priority of a service corresponding to the first scheduling request is not lower than a priority of a service corresponding to the third scheduling request, the first scheduling request being a pending scheduling request, and the third scheduling request being a scheduling request which the physical layer has been indicated to transmit;
that the first scheduling request is a first pending scheduling request after a previous pending scheduling request is cancelled;
that the first scheduling request is a first pending scheduling request triggered after a latest MAC PDU is packed;
that the first scheduling request is a scheduling request which the physical layer is not indicated to transmit after a previous pending scheduling request is cancelled;
that the first scheduling request is a first pending scheduling request after a previous pending scheduling request is cancelled, and a service and/or a logical channel and/or a logical channel group triggering the scheduling request correspond to a first service;
that the first scheduling request is a first pending scheduling request triggered after a latest MAC PDU is packed, and a service and/or a logical channel and/or a logical channel group triggering the scheduling request correspond to the first service;
that the first scheduling request is a scheduling request which the physical layer is not indicated to transmit after a previous pending scheduling request is cancelled, and a service and/or a logical channel and/or a logical channel group triggering the scheduling request correspond to the first service;
that the first scheduling request is a scheduling request triggered after a MAC PDU is packed;
that the first scheduling request is a scheduling request triggered after a MAC PDU is transmitted to the physical layer;
that the first scheduling request is a scheduling request triggered after a MAC PDU is transmitted;
that the uplink control channel resource transmitting the first scheduling request overlaps or partially overlaps with a first uplink data channel resource, and a length of the first uplink data channel resource is greater than or equal to a first threshold value;
that LCP mapping restriction configured for a logical channel triggering the first scheduling request is not met;
that the first uplink data channel resource does not match the LCP mapping restriction configured for a logical channel triggering the first scheduling request;
that an attribute of the first uplink data channel resource does not match the LCP mapping restriction configured for a logical channel triggering the first scheduling request;
that the first uplink data channel resource does not meet the LCP mapping restriction configured for a logical channel triggering the first scheduling request;
that an attribute of the first uplink data channel resource does not meet the LCP mapping restriction configured for a logical channel triggering the first scheduling request;
that a length of the first uplink data channel resource is greater than or equal to a second threshold value;
that the uplink control channel resource of the first scheduling request/the first scheduling request cannot be transmitted at the same time as the first uplink data channel resource;
that the uplink control channel resource of the first scheduling request/the first scheduling request cannot be multiplexed or piggybacked to the first uplink data channel resource;
that a service triggering the first scheduling request is the first service;
that a logical channel triggering the first scheduling request corresponds to the first service;
that a logical channel triggering the first scheduling request is a target logical channel;
that a priority of a logical channel triggering the first scheduling request is higher than a priority of a logical channel and/or a MAC CE carried by the PUSCH; and
that a logical channel triggering the first scheduling request is a logical channel corresponding to the first service, and a priority of a logical channel for the first service is higher than a priority of a logical channel and/or a MAC CE carried by the PUSCH.

31. The device according to any one of claims 19 to 24, wherein the indicating unit is configured to,
in a case where an uplink control channel resource transmitting the first scheduling request overlaps or partially overlaps with a first uplink data channel resource, when a logical channel corresponding to a first service triggers the first scheduling request, and a priority of the first service is higher than a priority of a service transmitted on a first uplink data channel or a priority of the first service is higher than a priority of a service corresponding to a buffer status report media access control control element (BSR MAC CE) carried by the first uplink data channel, and/or
in a case where the uplink control channel resource transmitting the first scheduling request overlaps or partially overlaps with the first uplink data channel resource, when a logical channel corresponding to the first service triggers the first scheduling request, and a priority of the first service is the same as a priority of a service transmitted on a first uplink data channel or a priority of the first service is the same as a priority of a service corresponding to the BSR MAC CE carried by the first uplink data channel,
the MAC layer indicating the physical layer to send the first scheduling request; and/or
the MAC layer indicating the physical layer to send preferentially the first scheduling request or the uplink control channel resource corresponding to the first scheduling request; and/or
the MAC layer indicating a service type corresponding to the first scheduling request to the physical layer; and/or
the MAC layer indicating logical channel information corresponding to the first scheduling request to the physical layer.

32. The device according to any one of claims 19 to 24, wherein the indicating unit is configured to,
in a case where an uplink control channel resource transmitting the first scheduling request overlaps or partially overlaps with a first uplink data channel resource, when a logical channel corresponding to a first service triggers the first scheduling request, and a priority of the first service is higher than a priority of a service transmitted on a first uplink data channel or a priority of the first service is higher than a priority of a service corresponding to a BSR MAC CE carried by the first uplink data channel, and/or
in a case where the uplink control channel resource transmitting the first scheduling request overlaps or partially overlaps with the first uplink data channel resource, when a logical channel corresponding to the first service triggers the first scheduling request, and a priority of the first service is the same as a priority of a service transmitted on the first uplink data channel or a priority of the first service is the same as a priority of a service corresponding to the BSR MAC CE carried by the first uplink data channel, and/or
the first scheduling request is a scheduling request triggered after a MAC PDU is packed, and/or
the first scheduling request is a scheduling request triggered after a MAC PDU is transmitted to the physical layer, and/or
the first scheduling request is a scheduling request triggered after a MAC PDU is transmitted, and/or
the uplink control channel resource transmitting the first scheduling request overlaps or partially overlaps with the first uplink data channel resource, and a length of the first uplink data channel resource is greater than or equal to a first threshold value, and/or
LCP mapping restriction configured for a logical channel triggering the first scheduling request is not met, and/or
the first uplink data channel resource does not match the LCP mapping restriction configured for a logical channel triggering the first scheduling request, and/or
an attribute of the first uplink data channel resource does not match the LCP mapping restriction configured for a logical channel triggering the first scheduling request, and/or
the first uplink data channel resource does not meet the LCP mapping restriction configured for a logical channel triggering the first scheduling request, and/or
an attribute of the first uplink data channel resource does not meet the LCP mapping restriction configured for a logical channel triggering the first scheduling request, and/or
a length of the first uplink data channel resource is greater than or equal to a second threshold value, and/or
the uplink control channel resource of the first scheduling request/the first scheduling request cannot be transmitted at the same time as the first uplink data channel resource, and/or
the uplink control channel resource of the first scheduling request/the first scheduling request cannot be multiplexed or piggybacked to the first uplink data channel resource, and/or
a service triggering the first scheduling request is a first service, and/or
a logical channel triggering the first scheduling request corresponds to a first service, and/or
a logical channel triggering the first scheduling request is a target logical channel, and/or
a priority of a logical channel triggering the first scheduling request is higher than a priority of a logical channel and/or a MAC CE carried by a PUSCH, and/or
a logical channel triggering the first scheduling request is a logical channel corresponding to the first service, and a priority of a logical channel of the first service is higher than a priority of a logical channel and/or a MAC CE carried by the PUSCH,
the MAC layer indicating the physical layer to transmit the first scheduling request; and/or
the MAC layer indicating the physical layer to transmit preferentially the first scheduling request or the uplink control channel resource corresponding to the first scheduling request; and/or
the MAC layer indicating a service type corresponding to the first scheduling request to the physical layer; and/or
the MAC layer indicating logical channel information corresponding to the first scheduling request to the physical layer; and/or
the MAC layer sending third information to the physical layer according to an indication from the physical layer, wherein the third information is information which the MAC layer is indicated by the physical layer to send.

33. The device according to claim 32, wherein:
the determining unit is configured to determine whether to transmit the first scheduling request or the first uplink data channel or the PRACH according to at least one of:
a priority/identifier of the first service, a priority/identifier of a logical channel carrying the first service, a priority/identifier of a logical channel group carrying the first service, an identifier/priority of a logical channel/a service to be transmitted, a priority of a service/a logical channel/data carried on the first uplink data channel, a priority of a MAC CE carried on the first uplink data channel or a priority/identifier of a logical channel/a service/data corresponding to a MAC CE, a priority of a logical channel triggering the first scheduling request, an identifier of a logical channel triggering the first scheduling request, a priority/identifier of a service/data corresponding to a logical channel triggering the first scheduling request, an identifier of a service/a logical channel/data carried on the first uplink data channel, the second information from the network, a priority/identifier of a logical channel/a service/data to be transmitted triggering the PRACH, and the first information.

34. The device according to any one of claims 19 to 24, wherein the indicating unit is configured to,
in a case where an uplink control channel resource transmitting the first scheduling request overlaps or partially overlaps with a first uplink data channel resource, when a logical channel corresponding to a first service triggers the first scheduling request, and a priority of the first service or a priority of a logical channel corresponding to the first service is higher than a priority of a service/data/a logical channel transmitted on the first uplink data channel, or a priority of the first service or a priority of a logical channel corresponding to the first service is higher than a priority of a MAC CE carried by the first uplink data channel or a priority of a service/data/a logical channel corresponding to a MAC CE, and/or
in a case where the uplink control channel resource transmitting the first scheduling request overlaps or partially overlaps with the first uplink data channel resource, when a logical channel corresponding to the first service triggers the first scheduling request and a priority of the first service or a priority of a logical channel corresponding to the first service is the same as a priority of a service/data/a logical channel transmitted on the first uplink data channel, or a priority of the first service or a priority of a logical channel corresponding to the first service is the same as a priority of a MAC CE carried by the first uplink data channel or a priority of a service/data/a logical channel corresponding to a MAC CE,
the MAC layer indicating the physical layer to transmit the first scheduling request; and/or
the MAC layer indicating to the physical layer that the first scheduling request or the uplink control channel resource corresponding to the first scheduling request is transmitted preferentially; and/or
the MAC layer indicating a service type corresponding to the first scheduling request to the physical layer; and/or
the MAC layer indicating logical channel information corresponding to the first scheduling request to the physical layer; and/or
the MAC layer indicating the first information to the physical layer.

35. The device according to claim 34, wherein:
the determining unit is configured to determine whether to transmit the first scheduling request or the first uplink data channel or the PRACH according to at least one of:
a priority/identifier of the first service, a priority/identifier of a logical channel carrying the first service, a priority/identifier of a logical channel group carrying the first service, an identifier/priority of a logical channel/a service to be transmitted, a priority/identifier of a service/a logical channel/data carried on the first uplink data channel, a priority of a MAC CE carried on the first uplink data channel or a priority/identifier of a logical channel/a service/data corresponding to a MAC CE, a priority of a logical channel triggering the first scheduling request, an identifier of a logical channel triggering the first scheduling request, a priority/identifier of a service/data corresponding to a logical channel triggering the first scheduling request, an identifier of a service/a logical channel/data carried on the first uplink data channel, the second information from the network, a priority/identifier of a logical channel/a service/data to be transmitted triggering the PRACH, and the first information.

36. The device according to any one of claims 31 to 35, wherein the first service comprises at least one of a high reliability and low latency service, an industrial Internet of Things service, a vertical industry service, an Internet of Vehicles service, and a service in a time-sensitive network.

37. A terminal, comprising a processor and a memory, wherein the memory is configured to store a computer program, and the processor is configured to call and run the computer program stored in the memory to perform the method according to any one of claims 1 to 18.

38. A chip, comprising a processor used to call and run a computer program from a memory, so that a device having the chip installed therein performs the method according to any one of claims 1 to 18.

39. A computer readable storage medium, configured to store a computer program, which causes a computer to perform the method according to any one of claims 1 to 18.

40. A computer program product, comprising computer program instructions, which cause a computer to perform the method according to any one of claims 1 to 18.

41. A computer program, causing the computer to perform the method according to any one of claims 1 to 18.
